(19) Europäisches Patentamt
European Patent Office
Office européen des brevets

(11) EP 1 705 210 B1

(12) **EUROPÄISCHE PATENTSCHRIFT**

(45) Veröffentlichungstag und Bekanntmachung des Hinweises auf die Patenterteilung:
**21.01.2009 Patentblatt 2009/04**

(51) Int Cl.:
***C08J 3/075*** *(2006.01)* ***C08K 7/16*** *(2006.01)*

(21) Anmeldenummer: **06110901.3**

(22) Anmeldetag: **09.03.2006**

(54) **Mikrogele und Verdickungsmittel enthaltende Zusammensetzungen**

Microgels and thickening agents-containing compositions

Compositions contenant des microgels et des épaississants

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.03.2005 DE 102005014272**

(43) Veröffentlichungstag der Anmeldung:
**27.09.2006 Patentblatt 2006/39**

(73) Patentinhaber:
- **RHEIN-CHEMIE RHEINAU GmbH 68219 Mannheim (DE)**
- **Lanxess Deutschland GmbH & Co.KG 51369 Leverkusen (DE)**

(72) Erfinder:
- **Ziser, Torsten Dr. 69488, Birkenau (DE)**
- **Galda, Patrick Dr. 76149, Karlsruhe (DE)**
- **Früh, Thomas Dr. 67117, Limburgerhof (DE)**
- **Fessenbecker, Achim Dr. 68753, Waghäusel (DE)**
- **Obrecht, Werner Prof. Dr. 47447, Moers (DE)**

(74) Vertreter: **Gille Hrabal Struck Neidlein Prop Roos Patentanwälte Brucknerstrasse 20 40593 Düsseldorf (DE)**

(56) Entgegenhaltungen:
**WO-A-20/05030843**

- **PATENT ABSTRACTS OF JAPAN Bd. 2003, Nr. 12, 5. Dezember 2003 (2003-12-05) & JP 2004 292693 A (NSK LTD), 21. Oktober 2004 (2004-10-21)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Zusammensetzung, die mindestens ein spezifisches nicht-vernetzbares organisches Medium, mindestens ein Mikrogel und mindestens ein Verdickungsmittel aufweist, Verfahren zu ihrer Herstellung, Verwendungen der Zusammensetzungen, und Polymere, Kautschuke, Schmierstoffe, Beschichtungen, die die Zusammensetzung enthalten.

Es ist bekannt, Kautschukgele, auch modifizierte Kautschukgele, in Abmischungen mit verschiedensten Kautschuken einzusetzen, um beispielsweise den Rollwiderstand bei der Herstellung von Kfz-Reifen zu verbessern (siehe z. B. DE 42 20 563, GB-PS 10 78 400 EP 405 216 und EP 854 171). Hierbei werden die Kautschukgele immer in feste Matrices eingearbeitet.

Bekannt ist auch, Druckfarbenpigmente in dafür geeigneten flüssigen Medien fein verteilt einzuarbeiten, um letztendlich Druckfarben herzustellen (siehe z. B. EP 0 953 615 A2, EP 0 953 615 A3). Hierbei werden Teilchengrößen von bis hinab zu 100 nm erreicht.

Nicht beschrieben in den genannten Dokumenten wird der Einsatz von Kautschukgelen als Feststoffkomponente in Mischungen mit flüssigen organischen Medien.

In Chinese Journal of Polymer Science, Band 20, Nr. 2, (2002), 93 - 98, werden durch energiereiche Strahlung vollständig vernetzte Mikrogele und ihre Verwendung zur Erhöhung der Schlagzähigkeit von Kunststoffen beschrieben.

JP-A-2004-292693 offenbart eine leitfähige Schmierfettzusammensetzung, welche ein elektrische Ladungen tragendes Mikrogel als Leitfähigkeit verleihendes Additiv enthält.

Aus der DE 2910154 sind Dispersionen von Kautschukteilchen mit organischen Lösungsmitteln bekannt.

Aus der DE-A-3742180 sind Dispersionen von silicon-haltigen Pfropfpolymerisaten in flüssigen Amiden bekannt, die ebenfalls aus wässrigen Latices hergestellt werden.

Mikrogel-enthaltende Zusammensetzungen sind grundlegend in der nichtvorveröffentlichten internationalen Anmeldung PCT/EP2004/052290 des vorliegenden Anmelders beschrieben worden.

Die Erfinder der vorliegenden Erfindung fanden nun, dass es möglich ist, Mikrogele gemeinsam mit Verdikkungsmittel in flüssigen organischen Medien bestimmter Viskosität beispielsweise mit einem Homogenisator fein zu verteilen und konnten somit neue Zusammensetzungen bereitstellen, die interessante, insbesondere rheologische Eigenschaften aufweisen, die sie für eine Vielzahl von Anwendungen, wie zum Beispiel in Schmierstoffen geeignet erscheinen läßt. Auf der Basis dieses Befundes vervollständigten die Erfinder ihre Erfindung.

Es wurden Mikrogel- und Verdickungsmittel-haltige Zusammensetzungen gefunden, für die unterschiedlichstes rheologisches Verhalten festgestellt wurde. In geeigneten Mikrogel- und Verdickungsmittel-haltigen Zusammensetzungen wurde überraschenderweise eine sehr starke Strukturviskosität oder Thixotropie, aber auch den Newton'schen Flüssigkeiten ähnliches Fließverhalten gefunden. Dies kann genutzt werden, um neben anderen Eigenschaften das Fließverhalten von beliebigen flüssigen Zusammensetzungen durch die Kombination von Mikrogelen und Verdickungsmitteln gezielt zu steuern.

So können durch die Kombination von Mikrogelen und Verdickungsmitteln Eigenschaften wie Absetzstabilität, Transparenz, Ölabscheidung, Tropfpunkt, Penetration, Konsistenz, Scherstabilität, Reibwerte, Verschleißverhalten in gewünschter Weise eingestellt werden, wobei auch Synergien festgestellt wurden, so dass sehr interessante Fette erhalten werden.

Die vorliegende Erfindung stellt somit eine Zusammensetzung bereit, enthaltend mindestens ein nicht-vernetzbares organisches Medium (A), welches bei einer Temperatur von 120°C eine Viskosität von weniger als 30000 mPas aufweist, mindestens ein vernetztes Mikrogel (B) und mindestens ein Verdickungsmittel (C), wobei das Mikrogel (B) ausgewählt wird aus nicht-modifizierten Mikrogelen und modifizierten, Mikrogelen, die funktionelle Gruppen aufweisen, und wobei die funktionellen Gruppen Aldehyd-, Carboxyl-, Nitril-, Mercapto-, Dithiocarbamat-, Polysulfid-, Xanthogenat-, Thiobenzthiazol-, Dithiophosphorsäuregruppen, ungesättigte Dicarbonsäuregruppen, Hydroxyl-, Epoxy-, Amin-, Säureamid-, Säureanhydrid-, Isocyanat- oder ungesättigte Gruppen sind.

Bevorzugt ist die Viskosität des organischen Mediums weniger als 1000 mPas, bevorzugter weniger als 200 mPas, noch bevorzugter weniger als 100 mPas bei 120°C, noch bevorzugter weniger als 20 mPas bei 120°C. Die dynamische Viskosität des nicht-vernetzbaren, organischen Mediums (A) wird bei einer Drehzahl von 5 $s^{-1}$ mit einem Kegel-Platte-Meßsystem nach DIN 53018 bei 120°C bestimmt.

<u>Mikrogele (B)</u>

Das in der erfindungsgemäßen Zusammensetzung verwendete Mikrogel (B) ist ein vernetztes Mikrogel. In einer bevorzugten Ausführungsform handelt es sich nicht um ein durch energiereiche Strahlung vernetztes Mikrogel. Energiereiche Strahlung meint hier zweckmäßig elektromagnetische Strahlung einer Wellenlänge von weniger als 0,1 μm. Die Verwendung von durch energiereiche Strahlung vernetzten Mikrogelen, wie beispielsweise in Chinese Journal of Polymer Science, Band 20, Nr. 2, (2002), 93 - 98, beschrieben, ist nachteilig, da durch energiereiche Strahlung

vernetzte Mikrogele in industriellem Maßstab praktisch nicht hergestellt werden können. Außerdem gehen mit der Verwendung energiereicher Strahlung aus radioaktiven Strahlungsquellen wie radioaktivem Kobalt schwerwiegende Sicherheitsprobleme einher. Da es sich weiterhin bei den strahlenvernetzten Mikrogelen in der Regel um vollständig strahlenvernetzte Mikrogele handelt, ist die Moduländerung, bei Einarbeitung der erfindungsgemäßen Zusammensetzung beispielsweise in Kunststoffe, von der Matrixphase zur dispergierten Phase unmittelbar. Hierdurch kann es bei schlagartiger Beanspruchung zu Abreißeffekten zwischen Matrix und dispergierter Phase kommen, wodurch die mechanischen Eigenschaften, das Quellverhalten und die Spannungsrisskorrosion der unter Verwendung der erfindungsgemäßen Zusammensetzungen hergestellten Mikrogel-enthaltenden Kunststoffe beeinträchtigt werden.

In einer bevorzugten Ausführungsform der Erfindung weisen die Primärpartikel des Mikrogels (B) eine annähernd kugelförmige Geometrie auf. Als Primärpartikel werden nach DIN 53206:1992-08 die durch geeignete physikalische Verfahren (Elektronenmikroskop), als Individuen erkennbare, in der kohärenten Phase dispergierten Mikrogelteilchen bezeichnet (Vgl. z. B. Römpp Lexikon, Lacke und Druckfarben, Georg Thieme Verlag, 1998). Eine annähernd kugelförmige" Geometrie bedeutet, dass die dispergierten Primärpartikel der Mikrogele bei der Ansicht der Zusammensetzung, beispielsweise mit einem Elektronenmikroskop, erkennbar im wesentlichen eine kreisförmige Fläche abbilden. Da die Mikrogele bei der Weiterverarbeitung der erfindungsgemäßen Zusammensetzungen ihre Form bzw. Morphologie im wesentlichen nicht verändern, gelten die vorstehenden und nachstehenden Ausführungen in gleicher Weise auch für die mit der erfindungsgemäßen Zusammensetzung erhaltenen mikrogel-enthaltenden Zusammensetzungen, wie z. B. Kunststoffe, Beschichtungsmittel, Schmierstoffe oder dergleichen.

In den in der erfindungsgemäßen Zusammensetzung enthaltenen Primärpartikeln des Mikrogels (B) beträgt die Abweichung der Durchmesser eines einzelnen Primärpartikels, definiert als

$$[(d1 - d2) / d2] \times 100,$$

worin d1 und d2 zwei beliebige Durchmesser des Primärpartikels sind und d1 > d2 ist, bevorzugt weniger als 250 %, bevorzugter weniger als 100 %, noch bevorzugter weniger als 80 %, noch bevorzugter weniger als 50 %.

Bevorzugt weisen mindestens 80 %, bevorzugter mindestens 90 %, noch bevorzugter mindestens 95% der Primärpartikel des Mikrogels eine Abweichung der Durchmesser, definiert als

$$[ (d1 - d2) / d2] \times 100,$$

worin d1 und d2 zwei beliebige Durchmesser des Primärpartikels sind und d1 > d2 ist, von weniger als 250 %, bevorzugt weniger als 100 %, noch bevorzugter weniger als 80 %, noch bevorzugter weniger als 50 % auf.

Die vorstehend erwähnte Abweichung der Durchmesser der einzelnen Partikel kann nach folgendem Verfahren bestimmt werden. Zunächst wird ein Dünnschnitt der erfindungsgemäßen verfestigten Zusammensetzung hergestellt. Dann wird eine transmissionselektronen-mikroskopische Aufnahme bei einer Vergrößerung von beispielsweise 10 000fach oder 200 000fach hergestellt. In einer Fläche von 833,7 x 828,8 nm wird an 10 Mikrogel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95% der vermessenen Mikrogel-Primärpartikeln jeweils unter 250 %, bevorzugter unter 100 %, noch bevorzugter weniger als 80 %, noch bevorzugter unter 50 %, so weisen die Mikrogel-Primärpartikeln das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden.

In der erfindungsgemäßen Zusammensetzung weisen die Primärpartikel des Mikrogels (B) bevorzugt einen durchschnittlichen Teilchendurchmesser von 5 bis 500 nm, bevorzugter von 20 bis 400 nm, bevorzugter von 20 bis 300 nm, bevorzugter von 20 bis 250 nm, noch bevorzugter 20 bis 99, noch bevorzugter 40 bis 80 nm auf (Durchmesserangaben nach DIN 53206). Die Herstellung besonders feinteiliger Mikrogele durch Emulsionspolymerisation erfolgt durch Steuerung der Reaktionsparameter in an sich bekannter Weise (s. z.B. H.G. Elias, Makromoleküle, Band 2, Technologie, 5. Auflage, 1992, Seite 99 ff).

Da sich die Morphologie der Mikrogele bei der Weiterverarbeitung der erfindungsgemäßen Zusammensetzung im wesentlichen nicht verändert, entspricht der durchschnittliche Teilchendurchmesser der dispergierten Primärpartikel im wesentlichen dem durchschnittlichen Teilchendurchmesser der dispergierten Primärpartikel, in den mit der erfindungsgemäßen Zusammensetzung erhaltenen Weiterverarbeitungsprodukten, wie Mikrogel-enthaltenden Kunststoffen,

Schmierstoffen, Beschichtungen. Dies stellt einen besonderen Vorteil der erfindungsgemäßen Zusammensetzung dar. Den Abnehmern können gewissermaßen maßgeschneiderte flüssige, lagerstabile Mikrogelformulierungen zur Verfügung gestellt werden, die eine definierte Morphologie der Mikrogele aufweisen und die der Abnehmer leicht in den gewünschten Anwendungen weiterverarbeiten kann. Eine vorherige aufwändige Dispergierung, Homogenisierung oder gar Herstellung der Mikrogele ist nicht mehr erforderlich, weshalb zu erwarten ist, dass derartige Mikrogele auch Anwendung auf Gebieten finden werden, auf denen ihre Anwendung bisher als zu aufwändig erschien.

In der erfindungsgemäßen Zusammensetzung weisen die Mikrogele (B) zweckmäßig in Toluol bei 23°C unlösliche Anteile (Gelgehalt) von mindestens etwa 30 Gew.-%, bevorzugter mindestens etwa 70 Gew.-%, bevorzugter mindestens etwa 80 Gew.-%, noch bevorzugter mindestens etwa 90 Gew.-% auf.

Der in Toluol unlösliche Anteil wird dabei in Toluol bei 23° bestimmt. Hierbei werden 250 mg des Mikrogels in 20 ml Toluol 24 Stunden unter Schütteln bei 23°C gequollen. Nach Zentrifugation mit 20.000 Upm wird der unlösliche Anteil abgetrennt und getrocknet. Der Gelgehalt ergibt sich aus dem Quotienten des getrockneten Rückstands und der Einwaage und wird in Gewichtsprozent angegeben.

In der erfindungsgemäßen Zusammensetzung weisen die Mikrogele (B) zweckmäßig in Toluol bei 23°C einen Quellungsindex von weniger als etwa 80, bevorzugter von weniger als 60 noch bevorzugter von weniger als 40 auf. So können die Quellungsindizes der Mikrogele (Qi) besonders bevorzugt zwischen 1 - 15 und 1-10 liegen. Der Quellungsindex wird aus dem Gewicht des in Toluol bei 23° für 24 Stunden gequollenen lösungsmittelhaltigen Mikrogels (nach Zentrifugation mit 20.000 Upm) und dem Gewicht des trockenen Mikrogels berechnet:

$$Qi = \text{Naßgewicht des Mikrogels} / \text{Trockengewicht des Mikrogels.}$$

Zur Ermittlung des Quellungsindex läßt man 250 mg des Mikrogels in 25 ml Toluol 24 h unter Schütteln quellen. Das Gel wird abzentrifugiert und gewogen und anschließend bei 70 °C bis zur Gewichtskonstanz getrocknet und nochmals gewogen.

In der erfindungsgemäßen Zusammensetzung weisen die Mikrogele (B) zweckmäßig Glastemperaturen Tg von -100°C bis +120°C, bevorzugter von -100°C bis +100°C, noch bevorzugter von -80°C bis +80 °C auf. In seltenen Fällen können auch Mikrogele verwendet werden, die aufgrund ihres hohen Vernetzungsgrades keine Glastemperatur aufweisen.

Weiterhin weisen die in der erfindungsgemäßen Zusammensetzung eingesetzten Mikrogele (B) bevorzugt eine Breite des Glasübergangs von größer als 5 °C, bevorzugt größer als 10°C, bevorzugter größer als 20 °C auf. Mikrogele, die eine solche Breite des Glasübergangs aufweisen, sind in der Regel - im Gegensatz zu vollständig homogen strahlenvernetzten Mikrogelen - nicht vollständig homogen vernetzt. Dies führt dazu, dass die Moduländerung von der Matrixphase zur dispergierten Phase in den aus den erfindungsgemäßen Zusammensetzungen beispielsweise hergestellten Mikrogel-enthaltenden Kunststoff-Zusammensetzungen nicht unmittelbar ist. Hierdurch kommt es bei schlagartiger Beanspruchung dieser Zusammensetzungen nicht zu Abreißeffekten zwischen Matrix und dispergierter Phase, wodurch die mechanischen Eigenschaften, das Quellverhalten und die Spannungsrisskorrosion vorteilhaft beeinflusst werden.

Die Bestimmung der Glasübergangstemperaturen (Tg) und der Breite des Glasübergangs (ΔTg) der Mikrogele erfolgt durch Differentialthermoanalyse (DTA, engl. Differential-Scanning-Calorimetry (DSC)) unter folgenden Bedingungen: Für die Bestimmung von Tg und ΔTg werden zwei Abkühl-/Aufheizzyklen durchgeführt. Tg und ΔTg werden im zweiten Aufheizzyklus bestimmt. Für die Bestimmungen werden 10 - 12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20K/min auf +150°C aufgeheizt wird. Der zweite DSC-Zyklus wird durch sofortige Abkühlung der Probe begonnen, sobald eine Probentemperatur von +150°C erreicht ist. Die Abkühlung erfolgt mit einer Geschwindigkeit von ungefähr 320 K/min. Im zweiten Aufheizzyklus wird die Probe wie im ersten Zyklus noch einmal auf +150°C aufgeheizt. Die Aufheizgeschwindigkeit im zweiten Zyklus ist erneut 20K/min. Tg und ΔTg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC- Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs ΔTg erhält man aus der Differenz der beiden Temperaturen.

Die in der erfindungsgemäßen Zusammensetzung enthaltenen, bevorzugt nicht durch energiereiche Strahlen vernetzten Mikrogele können an sich in bekannter Weise hergestellt werden (s. zum Beispiel EP-A- 405 216, EP-A-854171, DE-A 4220563, GB-PS 1078400, DE 197 01 489.5, DE 197 01 488.7, DE 198 34 804.5, DE 198 34 803.7, DE 198 34 802.9, DE 199 29 347.3, DE 199 39 865.8, DE 199 42 620.1, DE 199 42 614.7, DE 100 21 070.8, DE 100 38

488.9, DE 100 39 749.2, DE 100 52 287.4, DE 100 56 311.2 und DE 100 61 174.5). In den Patent(anmeldungen) EP-A 405 216, DE-A 4220563 sowie in GB-PS 1078400 wird die Verwendung von CR-, BR- und NBR-Mikrogelen in Mischungen mit doppelbindungshaltigen Kautschuken beansprucht. In DE 197 01 489.5 wird die Verwendung von nachträglich modifizierten Mikrogelen in Mischungen mit doppelbindungshaltigen Kautschuken wie NR, SBR und BR beschrieben.

Unter Mikrogelen werden zweckmäßig Kautschukpartikel verstanden, die insbesondere durch Vernetzung folgender Kautschuke erhalten werden:

| | |
|---|---|
| BR: | Polybutadien, |
| ABR: | Butadien/Acrylsäure-C1-4Alkylestercopolymere, |
| IR: | Polyisopren, |
| SBR: | Styrol-Butadien-Copolymerisate mit Styrolgehalten von 1-60, vorzugsweise 5-50 Gewichtsprozent, |
| X-SBR: | carboxlylierte Styrol-Butadien-Copolymerisate |
| FKM: | Fluorkautschuk, |
| ACM: | Acrylatkautschuk, |
| NBR: | Polybutadien-Acrylnitril-Copolymerisate mit Acrylnitrilgehalten von 5-60, vorzugsweise 10-50 Gewichtsprozent, |
| X-NBR: | carboxlierte Nitrilkautschuke |
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichtsprozent, |
| CIIR: | chlorierte Isobutylen/Isopren-Copolymerisate mit Bromgehalten von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO und ECO: | Epichlorhydrinkautschuke, |
| Q: | Silikonkautschuke, mit Ausnahme von Silikon-Propfpolymerisaten, |
| AU: | Polyesterurethanpolymerisate, |
| EU: | Polyetherurethanpolymerisate |
| ENR: | Epoxydierter Naturkautschuk oder Mischungen davon. |

Die Herstellung der unvernetzten Mikrogel-Ausgangsprodukte erfolgt zweckmäßig durch folgende Methoden:

1. Emulsionspolymerisation
2. Lösungspolymerisation von Kautschuken, die über Variante 1 nicht zugänglich sind,
3. Außerdem können natürlich vorkommende Latices wie z. B. Naturkautschuklatex eingesetzt werden.

In der erfindungsgemäßen Zusammensetzung sind die verwendeten Mikrogele (B) bevorzugt solche, die durch Emulsionspolymerisation und Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. Tetrafluorethylen, Vinylidenfluord, Hexafluorpropen, 2-Chlorbutadien, 2,3-Dichlorbutadien sowie doppelbindungshaltige Carbonsäuren wie z. B. Acrylsäure, Methacrylsäure, Maleinsäure, Itakonsäure, doppelbindungshaltige Hydroxyverbindungen wie z. B. Hydroxyethylmethacrylat, Hydroxyethylacrylat, Hydroxybutylmethacrylat, Aminfunktionalisierte (Meth)acrylate, Acrolein, N-Vinyl-2-pyrollidon, N-Allyl-Harnstoff und N-Allyl-Thioharnstoff sowie sekundäre Amino-(meth)-acrylsäureester wie 2-tert-Butylaminoethylmethacrylat und 2-tert-Butylaminoethylmethacrylamid. Die Vernetzung des Kautschukgels kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die direkte Vernetzung stellt eine bevorzugte Ausführungsform der Erfindung dar. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/ oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluß an die Emulsionspolymerisation setzt man am besten die Latices ein, die bei der Emulsionspolymerisation erhalten werden. Prinzipiell kann diese Methode auch bei nichtwässrigen Polymerdispersionen angewandt werden, die auf andere Weise wie z. B. durch Umlösung zugänglich sind. Auch Naturkautschuklatices können auf diese Weise vernetzt werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroper-oxid, Dibenzoyl-peroxid, Bis-(2,4-dichlorobenzoyl)peroxid, t-Butylperbenzoat sowie organische Azoverbindungen, wie Azo-bis-isobutyronitril und Azo-bis-cyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C- Doppelbindung durch Hydrazin wie in US 5,302,696 oder US 5,442,009 beschrieben oder ggf. andere Hydrierungsmitteln, beispielsweise Organometallhydridkomplexe erfolgen.

Vor, während oder nach der Nachvernetzung kann ggf. eine Teilchenvergrößerung durch Agglomeration durchgeführt werden.

Bei dem erfindungsgemäß bevorzugt verwendeten Herstellungsverfahren ohne Anwendung energiereicher Strahlung werden stets nicht vollständig homogen vernetzte Mikrogele erhalten, die die oben beschriebenen Vorteile aufweisen können.

Auch Kautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungen aus.

Man stellt die gewünschten Größen der Mikrogele dadurch her, daß man die Kautschuklösung in einem flüssigen Medium, vorzugsweise in Wasser gegebenenfalls unter Zugabe geeigneter oberflächenaktiver Hilfsmitteln wie z. B. Tensiden mittels geeigneter Aggregate mischt, so daß eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschriebenen, vor. Als Vernetzer eignen sich die zuvor genannten Verbindungen, wobei man das für die Herstellung der Dispersion eingesetzte Lösungsmittel gegebenenfalls vor der Vernetzung z. B. destillativ entfernen kann.

Als Mikrogele zur Herstellung der erfindungsgemäßen Zusammensetzung werden nicht-modifizierte Mikrogele, die im wesentlichen keine reaktiven Gruppen insbesondere an der Oberfläche aufweisen, und modifizierte, mit funktionellen Gruppen, insbesondere an der Oberfläche modifizierte Mikrogele verwendet werden. Letztere können durch chemische Umsetzung der bereits vernetzten Mikrogele mit gegenüber C=C-Doppelbindungen reaktiven Chemikalien hergestellt werden. Diese reaktiven Chemikalien sind insbesondere solche Verbindungen, mit deren Hilfe polare Gruppen wie z. B. Aldehyd-, Hydroxyl-, Carboxyl-, Nitril- sowie schwefelhaltige Gruppen, wie z. B. Mercapto-, Dithiocarbamat-, Polysulfid-, Xanthogenat-, Thiobenzthiazol- und/oder Dithiophosphorsäuregruppen und/oder ungesättigte Dicarbonsäuregruppen an die Mikrogele chemisch gebunden werden können. Dies trifft auch auf N,N'-m-Phenylendiamin zu. Ziel der Mikrogelmodifizierung ist die Verbesserung der Mikrogelverträglichkeit, wenn die erfindungsgemäße Zusammensetzung zur Herstellung der späteren Matrix, in die das Mikrogel eingearbeitet ist, oder die erfindungsgemäße Zusammensetzung zur Einarbeitung in eine Matrix verwendet wird, um eine gute Verteilbarkeit bei der Herstellung sowie eine gute Ankopplung zu erreichen.

Besonders bevorzugte Methoden der Modifizierung sind die Pfropfung der Mikrogele mit funktionellen Monomeren sowie die Umsetzung mit niedermolekularen Agentien.

Für die Pfropfung der Mikrogele mit funktionellen Monomeren geht man zweckmäßigerweise von der wässrigen Mikrogeldispersion aus, die man mit polaren Monomeren wie Acrylsäure, Methacrylsäure, Itakonsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrollidon, N-Allyl-Harnstoff und N-Allyl-Thioharnstoff sowie sekundären Amino-(meth)-acrylsäureester wie 2-tert-Butylaminoethylmethacrylat und 2-tert-Butylaminoethylmethacrylamid unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, daß das im

Modifikationsschritt verwendete Monomer möglichst quantitativ auf das unmodifizierte Mikrogel aufpfropft. Zweckmäßigerweise werden die funktionellen Monomere vor der vollständigen Vernetzung der Mikrogele hinzudosiert.

Prinzipiell denkbar ist auch eine Pfropfung der Mikrogele in nichtwässrigen Systemen, wobei auf diese Weise auch eine Modifikation mit Monomeren durch ionische Polymerisationsmethoden möglich wird.

Für eine Oberflächenmodifikation der Mikrogele mit niedermolekularen Agentien kommen insbesondere folgende Reagentien in Frage: elementarer Schwefel, Schwefelwasserstoff und/oder Alkylpolymercaptanen, wie 1,2-Dimercaptoethan oder 1,6-Dimercaptohexan, desweiteren Dialkyl- und Dialkylaryldithiocarbamat, wie den Alkalisalzen von Dimethyldithiocarbamat und/oder Dibenzyldithiocarbamat, ferner Alkyl- und Arylxanthogenaten, wie Kaliumethylxanthogenat und Natrium-isopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindung können Radikalstarter wie organische und anorganische Peroxide und/oder Azoinitiatoren, zugesetzt werden.

Auch eine weitere Umsetzung modifizierter Mikrogele wie z. B. die Herstellung hydroxylgruppenmodifizierter Mikrogele aus epoxydierten Mikrogelen wird als chemische Modifikation von Mikrogelen verstanden.

In einer bevorzugten Ausführungsform sind die Mikrogele durch HydroxylGruppen insbesondere auch an der Oberfläche davon modifiziert. Der Hydroxylgruppengehalt der Mikrogele wird durch Umsetzung mit Acetanydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gewichtsprozent, bezogen auf die Gesamtmenge an eingesetztem Kautschuk-Mikrogel, besonders bevorzugt sind 0,5-10 Gewichtsprozent bezogen auf Gesamtmenge an Kautschukgel.

Die Modifizierungsreaktionen können bei Temperaturen von 0-180 °C, bevorzugt 20-95 °C, ggf. unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Die Verwendung von unmodifizierten Mikrogelen ist insbesondere bei erfindungsgemäßen Zusammensetzungen bevorzugt, die zur Einarbeitung in unpolare Kautschuke oder unpolare thermoplastische Werkstoffen verwendet werden, wie zum Beispiel Polypropylen, Polyethylen und Blockcopolymeren auf Basis von Styrol, Butadien, Isopren (SBR, SIR) und hydrierten Isopren-Styrol-Blockcopolymeren (SEBS), und üblichen TPE-Os und TPE-Vs.

Die Verwendung von modifizierten Mikrogelen ist insbesondere bei erfindungsgemäßen Zusammensetzungen bevorzugt, die zur Einarbeitung in polare Kautschuke oder polare thermoplastische Werkstoffe (A) verwendet werden, wie zum Beispiel PA, TPE-A, PU, TPE-U, PC, PET, PBT, POM, PMMA, PVC, ABS , PTFE, PVDF.

Der mittlere Durchmesser der hergestellten Mikrogele kann mit hoher Genauigkeit beispielsweise auf 0,1 Mikrometer (100 nm) ± 0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele insbesondere im Bereich zwischen 5 bis 500 nm lassen sich mit gleicher Genauigkeit (mindestens Gew.-75 % aller Teilchen liegen um das Maximum der integrierten Korngrößenverteilungskurve (bestimmt durch Lichtstreuung) in einem Bereich von ± 10 % oberhalb und unterhalb des Maximums) herstellen und einsetzen. Dadurch kann die Morphologie der in der erfindungsgemäßen Zusammensetzung dispergierten Mikrogele praktisch punktgenau" eingestellt und damit die Eigenschaften der erfindungsgemäßen Zusammensetzung sowie der daraus beispielsweise hergestellten Kunststoffe eingestellt werden.

Die Aufarbeitung der so hergestellten Mikrogele vorzugsweise auf Basis von BR, SBR, NBR, SNBR, oder Acrylnitril oder ABR kann beispielsweise durch Eindampfen, Koagulation, durch Cokoagulation mit einem weiteren Latexpolymer, durch Gefrierkoagulation (vgl. US-PS 2187146) oder durch Sprühtrocknung erfolgen. Bei der Aufarbeitung durch Sprühtrocknung können handelsübliche auch Fließhilfen wie beispielsweise $CaCO_3$ oder Kieselsäure zugesetzt werden.

In einer bevorzugten Ausführungsform der erfindungsgemäßen Zusammensetzung basiert das Mikrogel (B) auf Kautschuk.

In einer bevorzugten Ausführungsform der erfindungsgemäßen Zusammensetzung ist das Mikrogel (B) durch funktionelle, gegenüber C=C-Doppelbindungen reaktive Gruppen modifiziert.

In einer bevorzugten Ausführungsform weist das Mikrogel (B) einen Quellungsindex in Toluol bei 23 °C von 1 bis 15 auf.

Die erfindungsgemäße Zusammensetzung weist bevorzugt eine Viskosität von 2 mPas bis zu 50000000 mPas, bevorzugter 50 mPas bis zu 3000000 mPas bei einer Drehzahl von 5 $s^{-1}$, mit einem Kegelplattenviskosimeter nach DIN

53018 gemessen, bei 20°C auf.

Organisches nicht-vernetzbares Medium (A)

Die erfindungsgemäße Zusammensetzung enthält mindestens ein organisches Medium (A), welches bei einer Temperatur von 120°C eine Viskosität von weniger als 30000 mPas, bevorzugter von weniger als 1000 mPas, bevorzugter von weniger als 200 mPas, bevorzugter von weniger als 100 mPas, noch bevorzugter weniger als 20 mPas bei 120°C aufweist.

Ein solches Medium ist bei Raumtemperatur (20°C) flüssig bis fest, bevorzugt flüssig bzw. fließfähig.

Organisches Medium im Sinne der Erfindung bedeutet, dass das Medium mindestens ein Kohlenstoffatom enthält.

Unter nicht-vernetzbaren Medien im Sinne der Erfindung werden insbesondere solche Medien verstanden, die keine über Heteroatome-enthaltende funktionelle Gruppen oder C=C-Gruppen vernetzbare Gruppen enthalten, wie insbesondere übliche Monomere oder Prepolymere, die in üblicher Weise radikalisch, mit UV-Strahlen, thermisch und/ oder durch Polyaddition bzw. Polykondensation unter Zusatz von Vernetzungsmitteln (z. B. Polyisocyanate, Polyamine, Säureanhydride) unter Bildung von Oligomeren oder Polymeren in üblicher Weise vernetzt bzw. polymerisiert werden. Erfindungsgemäß können als organische, nicht-vernetzbare Medien auch solche Medien verwendet werden, die zwar beispielsweise gewisse Anteile an ungesättigten Bindungen (gewisse Polyesteröle, Rapsöl) oder Hydroxygruppen (Polyether) enthalten, die jedoch nicht zu Oligomeren oder Polymeren in üblicher Weise vernetzt bzw. polymerisiert werden. Nicht-vernetzbaren Medien sind insbesondere auch Lösemittel, insbesondere solche nach DIN 55 945.

Bevorzugt handelt es sich bei dem nicht vernetzbaren Medium (A) um bei Raumtemperatur (20°C) flüssige, nicht vernetzbaren Medien, insbesondere um Kohlenwasserstoffe (geradkettige, verzweigte, cyclische, gesättigte, ungesättigte und/oder aromatische Kohlenwasserstoffe mit 1 bis 200 Kohlenstoffatomen, die gegebenenfalls durch ein oder mehrere Substituenten ausgewählt aus Halogenen, wie Chlor, Fluor, Hydroxy, Oxo, Amino, Carboxy, Carbonyl, Aceto, Amido substituiert sein können), synthetische Kohlenwasserstoffe, Polyetheröle, Esteröle, Phosphorsäureester, Siliciumhaltige Öle und Halogenkohlenwasserstoffe bzw. Halogenkohlenstoffe (s. z. B. Ullmanns Enzyklopädie der technischen Chemie, Verlag Chemie Weinheim, Band 20, (1981) 457 ff, 504, 507ff, 517/518, 524). Diese nicht vernetzbaren Medien (A) zeichnen sich insbesondere durch Viskositäten von 2 bis 1500 $mm^2/s$ (cSt) bei 40°C aus. Bevorzugt handelt es sich bei dem nicht vernetzbaren Medium (A) um bei Raumtemperatur (20°C) flüssige, nicht vernetzbaren Medien, insbesondere um Lösemittel nach DIN 55 945 wie Xylol, Solvent Naphtha, Methylethylketon, Methoxypropylacetat, N-Methylpyrrolidon, Dimethylsulfoxid.

Die synthetischen Kohlenwasserstoffe werden gewonnen durch Polymerisation von Olefinen, Kondensation von Olefinen oder Chlorparaffinen mit Aromaten oder dechlorierende Kondensation von Chlorparaffinen. Beispiele sind für die Polymerisatöle die Ethylen-Polymere, die Propylen-Polymere, die Polybutene, die Polymere höherer Olefine, die Alkylaromaten. Die Ethylen-Polymere haben Molekulargewichte zwischen 400 und 2000 g/mol. Die Polybutene besitzen Molekulargewichte zwischen 300 und 1500 g/mol.

Bei den Polyetherölen unterscheidet man aliphatische Polyetheröle, Polyalkylenglykole, insbesondere Polyethylen- und Polypropylenglykole, deren Mischpolymerisate, ihre Mono- und Diether sowie Esterether und Diester, Tetrahydrofuran-Polymeröle, Perfluorpolyalkylether und Polyphenylether. Perfluorpolyalkylether haben Molmassen von 1000 - 10000 g/Mol. Die aliphatischen Polyetheröle weisen Viskositäten von 8 bis 19 500 $mm^2/s$ bei 38°C auf.

Polyphenylether werden durch Kondensation von Alkaliphenolaten mit Halogenbenzolen hergestellt. Auch der Diphenylether und seine Alkylderivate finden Anwendung.

Beispiele für die Esteröle sind die Alkylester der Adipinsäure, das Bis-(2-ethylhexyl)-sebacat und das Bis-(3,5,5-trimethylhexyl)-sebacat oder -adipat sowie die Ester natürlicher Fettsäuren mit mono- oder polyfunktionellen Alkoholen, wie TMP-Oleat. Eine weitere Klasse bildet die fluorhaltigen Esteröle. Bei Phosphorsäureestern unterscheidet man Triaryl-, Trialkyl- und Alkylarylphosphate. Beispiele sind Tri-(2-ethylhexyl)-phosphat und Bis-(2-ethylhexyl)-phenyl-phosphat.

Siliciumhaltige Öle sind die Silikonöle (Polymere der Alkyl- und Arylsiloxanreihe) und die Kieselsäureester.

Beispiele für nachwachsende nicht-vernetzbare organische Medien sind Rapsöl, Sonnenblumenöl.

Zu den Halogenkohlenwasserstoffen bzw. Halogenkohlenstoffen gehören chlorierte Paraffine, wie Chlortrifluorethylenpolymeröle und Hexafluorbenzol.

(Nicht-reaktive) Lösemittel nach DIN 55 945 sind Hexan, Siedegrenzbenzine, Testbenzine, Xylol, Solvent Naphtha, Balsamterpentinöl, Methylethylketon, Methylisobutylketon, Methylamylketon, Isophoron, Butylacetat, 1-Methoxypropylacetat, Butylglykolacetat, Ethyldiglykolacetat und N-Methylpyrrolidon (Brock, Thomas, Groteklaes, Michael, Mischke, Peter, Lehrbuch der Lacktechnologie, Curt R. Vincentz Verlag Hannover, (1998) 93ff).

Besonders bevorzugte nicht-vernetzbare Medien schließen ein: Polyether, z. B. Baylube 68CL, naphthenische Öle, z. B. Nynas T 110, paraffinische, hochraffinierte Mineralöle, z. B. Shell Catenex S 932, Esteröle, z. B. Methylester SU, Öle auf Basis nachwachsender Rohstoffe, z. B. raffiniertes Rüböl. Besonders bevorzugte nicht vernetzbare Medien

(A) sind die große Klasse der Kohlenwasserstoffe, die Polyetheröle, und die Lösemittel nach DIN 55 945.

Verdickungsmittel (C)

Das in der erfindungsgemäßen Zusammensetzung verwendete Verdickungsmittel (C) im Sinne der Erfindung kann auch als Quell(ungs)mittel bezeichnet werden. Es saugt Flüssigkeiten auf und quellt dabei (s. Römpp Lexikon der Chemie, 10 Auflage). Es wird zweckmäßig ausgewählt aus natürlichen organischen Verdickungsmitteln, Derivaten natürlicher organischer Verdickungsmittel, synthetischen organischen Verdickungsmitteln und anorganischen Verdikkungsmitteln. Besonders bevorzugt wird es ausgewählt aus Polyharnstoffen und substituierten Polyharnstoffen. (Poly) harnstoffe sollen erfindungsgemäß Monoharnstoff-Verbindungen und Polyharnstoff-Verbindungen einschließen. Monoharnstoff-Verbindungen sind solche, die eine Gruppe

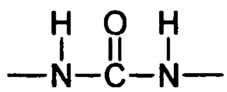

im Molekül aufweisen, wobei die freien Valenzen durch mindestens eine organische Gruppe abgesättigt sind, Harnstoff selbst also ausgenommen ist. Erfindungsgemäß bevorzugt sind jedoch die Polyharnstoff-Verbindungen, die mindestens zwei Gruppen

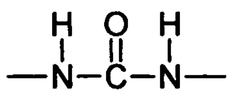

im Molekül aufweisen. Hinsichtlich der Herstellungsverfahren geeigneter Polyharnstoffe kann beispielsweise auf die WO 02/02683 verwiesen werden. Weitere geeignete Verdickungsgmittel schließen ein: Diharnstoffderivate, Triharnstoffderivate, Tetraharnstoffderivate, Bentonit, Hectorit, Montmorillonit, hochdisperse Kieselsäuren, synthetische Kieselsäure, Polyethylen, Polypropylen, Polytetrafluorethylen, Substituierte Polyamide, Polyimide, Einfachseifen unterschiedlicher Metallbasen, z. B. Calcium-, Natrium-, Lithiumstearatseife, Lithium-12-hydroxystearat, Aluminiumstearatseife, Einfachseifen sind aus einer Metallbase und einer Fettsäure aufgebaut. Alle Verdickermoleküle sind gleich. Gemischtseifen unterschiedlicher Metallbasen; Gemischtseifen sind aus unterschiedlichen Metallbasen und einer Fettsäure aufgebaut. Komplexseife unterschiedlicher Metallbasen, z. B. Calciumkomplexseife, Natriumkomplexseife, Lithiumkomplexseife, Aluminiumkomplexseife; Komplexseifen sind aus einer Metallbase, einer typischen Nichtfettsäure (z. B. Essigsäure, Benzoesäure, Borsäure) und einer Fettsäure aufgebaut; sie enthalten keine einheitlich gleichen Verdickermoleküle. Fettsäuren in den vorstehend genannten Verdickungsmittel sind z. B. Capron-, Capryl-, Caprin, Laurin-, Myristin-, Palmitin-, Stearin-, Arachin-, Behen- Lignocerinsäure sowie Hexadecen-, Tetradecen-, Öl-, Eruca-, Ricinol-, Linol-, Linolen-, Elainostearin-, Licanol-, und Clupanodonsäure.

Weitere Verdickungsmittel sind Celluloseether, Hydroxyethylcellulose, Hydroxyproylcellulose, Polyacryl- und Polymethacryl-Verbindungen, Vinylpolymere, Polycarbonsäuren und Polyether.

Die erfindungsgemäß verwendeten Mikrogele (B) können ebenfalls eine verdickende Wirkung aufweisen, sie sind aber von den erfindungsgemäß verwendeten Verdickungsmitteln (C) verschieden, da es sich bei letzteren nicht um Mikrogele handelt.

Bevorzugt handelt es sich bei dem erfindungsgemäß verwendeten Verdickungsmittel (C) um einen Polyharnstoff-Verdicker, ein Bentonit, ein Kieselgel oder einen anorganischen Seifenverdicker.

Die erfindungsgemäße Zusammensetzung enthält bevorzugt in der Summe 0,1 bis 90 Gew.-% des Mikrogels (B) und des Verdickungsmittels (C), bezogen auf die Gesamtmenge der Zusammensetzung, wobei das Gewichtsverhältnis von Mikrogel (B) zu Verdicker (C) von 0,1 : 99,9 bis 99,9 : 0,1 beträgt.

Noch bevorzugter beträgt das Gewichtsverhältnis des nicht-vernetzbaren organischen Mediums (A) zur Summe von Mikrogel (B) und Verdicker (C) von 70 : 30 bis 99,7 : 0,3, besonders bevorzugt 80 : 20 bis 90 : 10.

Bevorzugt enthält die erfindungsgemäße Zusammensetzung 10 bis 99,9 Gew.-% des nicht-vernetzbaren organischen Mediums (A).

Die erfindungsgemäße Zusammensetzung enthält weiterhin bevorzugt 0,5 bis 90 Gew.-%, bevorzugter 2 - 40 Gew.-%, noch bevorzugter 5 - 30 Gew.-% der Summe aus Mikrogel (B) und Verdickungsmittel (C), bezogen auf die Gesamtmenge der Zusammensetzung.

Die erfindungsgemäße Zusammensetzung enthält weiterhin bevorzugt 10 bis 99,5 Gew.-%, bevorzugter 40

bis 97 Gew.-%, noch bevorzugter 50 bis 95 Gew.-%, weiterhin bevorzugter 60 bis 95 Gew.-% des organischen Mediums (A)).

Die erfindungsgemäße Zusammensetzung besteht bevorzugt aus dem organischen nicht vernetzbaren Medium (A), dem Mikrogel (B), dem Verdickungsmittel (C) und gegebenenfalls den unten stehenden weiteren Komponenten. Die Anwesenheit von Wasser ist nicht bevorzugt, bevorzugt enthalten die erfindungsgemäßen Zusammensetzungen weniger als 0,8 Gew.-%, noch bevorzugter weniger als 0,5 Gew.-% Wasser. Am meisten bevorzugt ist die Anwesenheit von Wasser ausgeschlossen (< 0,1 Gew.-%). Letzteres ist herstellungsbedingt im allgemeinen bei den erfindungsgemäßen Zusammensetzungen der Fall.

Die erfindungsgemäße Zusammensetzung kann zusätzlich Füllstoffe, Pigmente und Additive wie Dispergierhilfsmittel, Oxidations- und, Extrem-Pressure- und Verschleiß-Schutz-Additive, Festschmierstoffe, Friction Modifier, Detergent-Dispersant Additive, Schauminhibitoren, Pourpointerniedriger, Haftverbesserer, Konservierungs-Wirkstoffe, Farbstoffe, Antistatika, Entlüfter, Fließmittel, Verlaufsmittel, Hilfsmittel zur Untergrundbenetzung, Anti-Absetzmittel, Hilfsmittel zur Steuerung der Untergrundbenetzung, zur Steuerung der Leitfähigkeit, Demulgatoren, Korrosionschutzadditive, Buntmetalldesaktivatoren, Reibwertmodifizierungsmittel enthalten (W. J. Bartz, Additive in Schmierstoffen 1994 expert verlag Renningen-Malmsheim).

Dabei lassen sich insbesondere die genannten Additive besonders gleichmäßig in die erfindungsgemäßen Zusammensetzungen einarbeiten, was wiederum zur Verbesserung der daraus hergestellten Produkte, wie Polymerzusammensetzungen, Schmierstoffe führt.

Besonders geeignete Pigmente und Füllstoffe zur Herstellung der erfindungsgemäßen Zusammensetzungen, die das nicht-vernetzbare Medium (A) enthalten, und daraus hergestellter Mikrogel-enthaltende Kunststoffe sind beispielsweise: anorganische und organische Pigmente, silikatische Füllstoffe wie Kaolin, Talkum, Carbonate wie Calciumcarbonat und Dolomit, Bariumsulfat,

Metalloxide, wie Zinkoxid, Calciumoxid, Magnesiumoxid, Aluminiumoxid, hochdisperse Kieselsäuren (gefällte und thermisch hergestellte Kieselsäuren), letztere nicht als Verdickungsmittel, Metallhydroxide, wie Aluminiumhydroxid und Magnesiumhydroxid, Glasfasern und Glasfaserprodukte (Latten, Stränge oder Mikroglaskugeln), Kohlenstofffasern, Thermoplastfasern (Polyamid, Polyester, Aramid), Kautschukgele auf Basis Polychloropren und/oder Polybutadien oder auch aller anderer vorher beschriebener Gelpartikel, die einen hohen Vernetzungsgrad und eine Teilchengröße von 5 bis 1000 nm besitzen.

Die genannten Füllstoffe können alleine oder im Gemisch eingesetzt werden. In einer besonders bevorzugten Ausführung des Verfahrens werden 0,5 - 30 Gewichtsteile Kautschukgel (B) + Verdickungsmittel (C), gegebenenfalls zusammen mit 0,1 bis 40 Gewichtsteilen Füllstoffen, und 30 - 99,5 Gewichtsteile des flüssigen nicht-vernetzbaren Mediums (A) zur Herstellung der erfindungsgemäßen Zusammensetzungen eingesetzt.

Die erfindungsgemäßen Zusammensetzungen können weitere Hilfsmittel enthalten wie Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Wachse, Streckmittel, organische Säuren, sowie Füllstoffaktivatoren, wie beispielsweise Trimethoxysilan, Polyethylenglykol, oder andere, die in den beschriebenen Industrien bekannt sind.

Die Hilfsmittel werden in üblichen Mengen, die sich u.a. nach dem Verwendungszweck richten, eingesetzt. Übliche Mengen sind z. B. Mengen von 0,1 bis 50 Gew.-%, bezogen auf eingesetzte Mengen an flüssigem Medium (A) bzw. an eingesetztem Kautschukgel (B).

In einer bevorzugten Ausführungsform wird die erfindungsgemäße Zusammensetzung durch Mischen von mindestens einem nicht-vernetzbaren, organischen Medium (A), welches bei einer Temperatur von 120°C eine Viskosität von weniger als 30000 mPas aufweist, und mindestens einem trockenen Mikrogelpulver (B) (bevorzugt weniger als 1 Gew.-%, noch bevorzugter weniger als 0,5 Gew.-% flüchtige Anteile (beim Mischen der Komponente (A) und (B) werden keine Mikrogel-Latices verwendet) sowie gegebenenfalls Verdickungsmittel (C), das bevorzugt nicht durch energiereiche Strahlen vernetzt ist, mittels eines Homogenisators, einer Perlmühle, einer Dreiwalze, einer Ein- oder Mehrwellen-Extruderschnecke, eines Kneters und/ oder eines Dissolvers, bevorzugt mittels eines Homogenisators, einer Perlmühle oder einer Dreiwalze hergestellt. Das Verdickungsmittel (C) kann während der Homogenisierung anwesend sein oder danach zugesetzt werden. Bevorzugt ist es während der Homogenisierung anwesend.

Hinsichtlich der Viskosität der herzustellenden Zusammensetzung ist der Kneter, im welchem bevorzugt nur sehr hochviskose (fast feste bis feste) Zusammensetzungen eingesetzt werden können, am eingeschränktesten, d. h. er ist nur in Sonderfällen anwendbar.

Nachteilig an der Perlmühle ist der vergleichsweise eingeschränkte Viskositätsbereich (tendenziell dünne Zusammensetzungen), hohe Reinigungsaufwand, teure Produktwechsel der verwendbaren Zusammensetzungen sowie der Abrieb von Kugeln und Mahlapparatur.

Besonders bevorzugt erfolgt die Homogenisierung der erfindungsgemäßen Zusammensetzungen mittels eines Homogenisators oder einer Dreiwalze. Nachteilig an der Dreiwalze ist der vergleichsweise eingeschränkte Viskositätsbereich (tendenziell sehr dicke Zusammensetzungen), geringer Durchsatz und die nicht geschlossene Arbeitsweise (schlechter Arbeitsschutz). Sehr bevorzugt erfolgt die Homogenisierung der erfindungsgemäßen Zusammensetzungen

daher mittels eines Homogenisators. Der Homogenisator erlaubt es dünne und dicke Zusammensetzungen bei hohem Durchsatz zu verarbeiten (hohe Flexibilität). Produktwechsel sind vergleichsweise schnell und problemlos möglich.

Überraschend und neu ist, dass die Mikrogele (B) in nicht vernetzbaren organischen Medien dispergiert werden können; insbesondere überraschend ist die bis zu den Primärpartikeln gelungene Dispergierung (s. Beispiele).

Die Dispergierung der Mikrogele (B) sowie gegebenenfalls des Verdickungsmittels (C) im flüssigen Medium (A) erfolgt zweckmäßig im Homogenisator im Homogenisierventil (s. Abb. 1).

Bei dem erfindungsgemäß bevorzugt eingesetzten Verfahren werden Agglomerate in Aggregate und/oder Primärpartikel zerteilt. Agglomerate sind physikalisch trennbare Einheiten, bei deren Dispergierung keine Änderung der Primärpartikelgröße erfolgt.

Abb. 1 zeigt die Funktionsweise des Homogenisierventils.
(Darin bedeuten:

Basic product: Ausgangsprodukt,
Valve seat: Ventilsitz
Valve: Ventil
Homogenised product: Homogenisiertes Produkt).

Das zu homogenisierende Produkt tritt in das Homogenisierventil mit langsamer Geschwindigkeit ein und wird im Homogenisierspalt auf hohe Geschwindigkeiten beschleunigt. Die Dispergierung erfolgt hinter dem Spalt hauptsächlich aufgrund von Turbulenzen und Kavitation (William D. Pandolfe, Peder Baekgaard, Marketing Bulletin der Fa. APV Homogeniser Group - "Highpressure homogenisers processes, product and applications").

Die Temperatur der erfindungsgemäßen Zusammensetzung beträgt bei Aufgabe in den Homogenisator zweckmäßig -40 - 140°C, vorzugsweise 20 - 80 °C.

Die zu homogenisierende erfindungsgemäßen Zusammensetzung wird zweckmäßig bei einem Druck von 20 bis 4000 bar, bevorzugt 100 bis 4000 bar, bevorzugt 200 bis 4000 bar, bevorzugt 200 - 2000 bar, sehr bevorzugt 500 - 1500 bar im Gerät homogenisiert. Die Anzahl der Durchläufe richtet sich nach der Güte gewünschten Dispergiergüte und kann zwischen einem und 20, bevorzugt einem bis 10, bevorzugter einem bis vier Durchgängen variieren.

Die erfindungsgemäß hergestellten Zusammensetzungen besitzen eine besonders feine Partikelverteilung, die besonders mit dem Homogenisator erreicht wird, der auch hinsichtlich der Flexibilität des Verfahrens bezüglich variierender Viskositäten der flüssigen Medien und der resultierenden Zusammensetzungen und notwendigen Temperaturen sowie der Dispergiergüte äußerst vorteilhaft ist.

Die Erfindung betrifft weiterhin die Verwendung der erfindungsgemäßen Zusammensetzungen in Schmiermittel, Beschichtungsmitteln, Klebstoffen, Kautschuken, Polymeren, Kunststoffe und TPE's.
auch die daraus nach üblichen Verfahren hergestellten Formkörper und Beschichtungen.

Die Erfindung wird mit Blick auf die folgenden Beispiele näher erläutert. Die Erfindung ist selbstverständlich nicht auf diese Beispiele beschränkt.

## Beispiele

Verwendete Mikrogele, Verdicker und Schmierstoffe:

Micromorph 5P ist ein vernetztes Kautschukgel mit einer OH-Zahl von 4 auf Basis von SBR der Firma Rhein-Chemie Rheinau GmbH.
Micromorph 1 P ist ein vernetztes, oberflächenmodifiziertes Kautschukgel auf Basis SBR der Fa. RheinChemie Rheinau GmbH. OBR 1326K ist ein vernetztes, oberflächenmodifiziertes Kautschukgel (Laborprodukt) auf Basis BR (butadiene rubber) der Lanxess AG.
OBR 1295 ist ein vernetztes, nicht oberflächenmodifiziertes Kautschukgel (Laborprodukt) auf Basis Acrylnitril der Lanxess AG (Tab. 1).
Additin M 10411 ist ein Polyharnstoffverdicker der Fa. RheinChemie Rheinau GmbH.
Bei Nynas T 110 handelt es sich um hydriertes naphthenisches Öl der Nynas Naphthenics AB.

Tab. 1. Zusammensetzung der Mikrogele OBR 1295, OBR 1326K, Micromorph 1 P und Micromorph 5P.

| Bezeichnung | Butadien | Styrol | ACN | EGDMA | TMPTMA | HEMA | Bemerkungen |
|---|---|---|---|---|---|---|---|
| OBR 1295 | - | - | 94 | - | 6 | - | |
| OBR 1326K | 87 | - | | | 3 | 10 | BR |
| Micromorph 1P | 12 | 80 | - | 5 | - | 3 | SBR |

(fortgesetzt)

| Bezeichnung | Butadien | Styrol | ACN | EGDMA | TMPTMA | HEMA | Bemerkungen |
|---|---|---|---|---|---|---|---|
| Micromorph 5P | 61 | 39 | - | - | - | - | 2,5 DCP[1)] |
| 1) DCP - Dicumylperoxid | | | | | | | |

Die charakteristischen Daten der Gele sind in der Tabelle 2 zusammengefasst.

Tab. 2. Eigenschaften der Mikrogele Micromorph 1 P und 5P, OBR 1326K und OBR 1295.

| Mikrogel | Gel-typ | Analytische Daten | | | | | | | | |
|---|---|---|---|---|---|---|---|---|---|---|
| | | $d_{50}$ | $O_{spez.}$ | Teilchen- | $T_g$ | Gel | QI | OH- | Säure- | Tg-Stufe |
| | | | | Dichte | | | | Zahl | zahl | DSC/2. Aufhzg. |
| | | [nm] | [$m^2$/g] | [g/ml] | [°C] | [Gew.-%] | | [mg KOH/g] | | [°C] |
| OBR 1295 | (ACN) | 106 | - | 1,182 | 106 | - | - | - | - | 27 |
| OBR 1326K | BR | 49 | 123 | 0,928 | -77,0 | 97 | 8 | 41 | 5 | 8 |
| Micromorph 1P | SBR | 69 | - | - | 56 | 96 | 7,4 | 41 | 0,4 | - |
| Micromorph 5P | SBR | 57 | 111 | - | - | 92 | < 5 | 4 | 1 | - |

In der Tabelle bedeuten:

DCP: Dicumylperoxid

$d_{50}$: Der Durchmesser $\bar{d}_{50}$ ist nach DIN 53 206 als der Mittelwert definiert. Es stellt hier den mittleren Teilchendurchmesser der Teilchen im Latex dar. Der Teilchendurchmesser der Latexteilchen wurde hier mittels Ultrazentrifugation bestimmt (W. Scholtan, H. Lange, Bestimmung der Teilchengrößenverteilung von Latices mit der Ultrazentrifuge", Kolloid-Zeitschrift und Zeitschrift für Polymere (1972) Band 250, Heft, 8). Die Durchmesserangaben im Latex und für die Primärpartikel in den erfindungsgemäßen Zusammensetzungen sind praktisch gleich, da sich die Teilchengröße der Mikrogelteilchen bei der Herstellung der erfindungsgemäßen Zusammensetzung nicht ändert.

Tg: Glastemperatur

Für die Bestimmung von Tg: und ΔTg wird das Gerät DSC-2 von Perkin-Elmer benutzt.

Quellungsindex QI

Der Quellungsindex QI wurde wie folgt bestimmt:
Der Quellungsindex wird aus dem Gewicht des in Toluol bei 23° für 24 Stunden gequollenen lösungsmittelhaltigen Mikrogels und dem Gewicht des trockenen Mikrogels berechnet:

$$\text{Qi} = \text{Naßgewicht des Mikrogels} / \text{Trockengewicht des Mikrogels.}$$

Zur Ermittlung des Quellungsindex läßt man 250 mg des Mikrogels in 25 ml Toluol 24 h unter Schütteln quellen. Das mit Toluol gequollene (nasse) Gel wird nach Zentrifugation mit 20.000 Upm gewogen und anschließend bei 70 °C bis zur Gewichtskonstanz getrocknet und nochmals gewogen.

OH-Zahl (Hydroxylzahl)

Die OH-Zahl (Hydroxylzahl) wird nach DIN 53240 bestimmt, und entspricht der Menge an KOH in mg, die der Essigsäure-Menge äquivalent ist, die bei der Acetylierung mit Essigsäureanhydrid von 1 g Substanz freigesetzt wird.

Säurezahl

Die Säurezahl wird wie oben bereits erwähnt nach DIN 53402 bestimmt und entspricht der Menge KOH in mg, die erforderlich ist um ein g des Polymers zu neutralisieren.

Gelgehalt

Der Gelgehalt entspricht dem in Toluol unlöslichen Anteil bei 23°C. Der Gelgehalt ergibt sich aus dem Quotienten des getrockneten Rückstands und der Einwaage und wird in Gewichtsprozent angegeben.

Herstellungsbeispiel 1 zu Micromorph 1P

Micromorph 1 P ist ein Mikrogel auf Basis von hydroxylmodifiziertem SBR, hergestellt durch direkte Emulsionspolymerisation unter Verwendung des vernetzenden Comonomers Ethylenglykoldimethacrylat.

Es werden 325 g des Na-Salzes einer langkettigen Alkylsulfonsäure (330 g Mersolat K30/95 der Bayer AG) und 235 g des Na-Salzes methylenverbrückter Naphthalinsulfonsäure (Baykanol PQ der Bayer AG) in 18,71 kg Wasser gelöst und in einem 40 l-Autoklaven vorgelegt. Der Autoklav wird 3mal evakuiert und mit Stickstoff beaufschlagt. Danach werden 8,82 kg Styrol, 1,32 kg Butadien, 503 g Ethylenglykoldimethacrylat (90%ig), 314 g Hydroxyethylmethacrylat (96%) und 0,75 g Hydrochinonmonomethylether zugegeben. Die Reaktionsmischung wird unter Rühren auf 30°C aufgeheizt. Anschließend wird eine wässrige Lösung bestehend aus 170 g Wasser, 1,69 g Ethylendiamintetraessigsäure (Merck-Schuchardt), 1,35 g Eisen(II)-Sulfat*7H20, 3,47 g Rongalit C (Merck-Schuchardt) sowie 5,24 g Trinatriumphosphat*12H2O zudosiert. Die Reaktion wird durch Zugabe einer wässrigen Lösung von 2,8 g p-Menthanhydroperoxid (Trigonox NT 50 der Akzo-Degussa) und 10,53 g Mersolat K 30/95, gelöst in 250 g Wasser gestartet. Nach 5 Stunden Reaktionszeit aktiviert man mit einer wässrigen Lösung bestehend aus 250 g Wasser, in dem 10,53 g Mersolat K30/95 und 2,8 g p-Menthanhydroperoxid (Trigonox NT 50) gelöst sind, nach. Bei Erreichen eines Polymerisationsumsatzes von 95-99 % wird die Polymerisation durch Zugabe einer wässrigen Lösung von 25,53 g Diethylhydroxylamin, gelöst in 500 g Wasser, abgestoppt. Danach werden nicht umgesetzte Monomeren durch Strippen mit Wasserdampf aus dem Latex entfernt. Der Latex wird filtriert und wie im Beispiel 2 der US 6399706 mit Stabilisator versetzt, koaguliert und getrocknet.

Micromorph 5P wird analog hergestellt. Die trockenen erfindungsgemäß weiterverarbeiteten Mikrogelpulver Micromorph 1 P und Micromorph 5P wurden aus dem Latex durch Sprühtrocknung gewonnen.

Herstellungsbeispiel 2 zu Micromorph 5P (Peroxidisch vernetzte Mikrogele)

Die Herstellung des Mikrogels erfolgte durch Vernetzung eines SBR-Latex mit 39 Gew.% eingebautem Styrol (Krylene 1721 von Bayer France) in Latexform mit 2,5 phr Dicumylperoxid (DCP).
Die Vernetzung von Krylene 1721 mit Dicumylperoxid erfolgte wie in den Beispielen 1) - 4) der US 6127488 beschrieben, wobei für die Vernetzung 2,5 phr Dicumylperoxid eingesetzt wurden.
Vor Einsatz des Mikrogels wird es in einem Vakuumtrockenschrank der Firma Haraeus Instruments, Typ Vacutherm VT 6130, bei 100 mbar bis zur Gewichtskonstanz getrocknet.

Herstellung der erfindungsgemäßen Zusammensetzungen

Für die Herstellung der erfindungsgemäßen Zusammensetzung wurden das nicht-vernetzbare organische Medium und das jeweilige Mikrogel und der Verdicker Additin 10411 unter Rühren mittels Dissolver zugegeben. Die Mischung wurde mindestens einen Tag lang stehen gelassen und dann mit dem Homogenisator weiterverarbeitet. Die erfindungsgemäßen Zusammensetzung wurde bei Raumtemperatur in den Homogenisator gegeben und bei 900 bis 1000 bar im Batchbetrieb viermal durch den Homogenisator gegeben. Beim ersten Durchgang erwärmt sich die Mikrogelpaste auf ca. 40°C, beim zweiten Durchgang auf ca. 70°C. Danach wurde die Mikrogelpaste auf Raumtemperatur durch Stehenlassen abgekühlt und der Vorgang wiederholt, bis vier Durchgänge erreicht worden sind.

Die rheologischen Eigenschaften der Zusammensetzung wurden mit einem Rheometer, MCR300, der Firma Physica bestimmt. Als Messkörper wurde ein Platte-Kegel-System, CP 50-2, benutzt. Die Messungen wurden bei 20°C durchgeführt (Scherprogramm: Temperatur = 20°C).

In der Tabelle 3 sind die Viskositäten η, die bei Scherraten v' von 5 $s^{-1}$, 100 $s^{-1}$, 1000 $s^{-1}$ und 0,1 $s^{-1}$ gemessen wurden, dargestellt.

Tab. 3. Rheologische Eigenschaften der Additin 10411-Mikrogel (Micromorph 1 P und 5P, OBR 1326K, OBR 1295)-Kombinationen in Nynas T110.

| Name | Mikrogel MG-Typ | MG-Konzentration | PU-V-Konzentration | Dispergierung | $\eta$ bei $\gamma$=5 $s^{-1}$ | $\eta$ bei $\gamma$=100 $s^{-1}$ | $\eta$ bei $\gamma$=1000 $s^{-1}$ | $\eta$ bei $\gamma$=0,1$s^{-1}$/ | $\gamma$(0,1 $s^{-1}$) $\gamma$(1000 $s^{-1}$ |
|---|---|---|---|---|---|---|---|---|---|
| | | [%] | [%] | | [Pa*s] | [Pa*s] | [Pa*s] | [Pa*s] | [ ] |
| M.5P-NT110 (14%)-4x | M.5P | 14,10 | 0,00 | 4x | 38 | 3,4 | 1,76 | 488 | 277,3 |
| M.5P-A10411-NT110(11:4)-4x | | 11,20 | 3.75 | 4x | 133 | 9,0 | 2,53 | 1070 | 422,9 |
| M.5P-A10411-NT110(9:5)-4x | | 9,25 | 4,75 | 4x | 156 | 8,6 | 2,44 | 1270 | 520,5 |
| M.5P-A10411-NT110(7:7)-4x | | 7,00 | 7,00 | 4x | 224 | 10,8 | 2,68 | 1030 | 384,3 |
| M.5P-A10411-NT110(5:10)-4x | | 5,25 | 9,75 | 4x | 202 | 10,6 | 2,71 | 5700 | 2103,3 |
| | | | | | | | | | |
| M.1P-NT110 (14%)-4x | M.1P | 14,10 | 0,00 | 4x | 2,9 | 1,4 | 1,03 | 3,2 | 3,1 |
| M.1P-A10411-NT110(11:4)-4x | | 11,20 | 3,75 | 4x | 24 | 3,3 | 1,62 | 553 | 341,4 |
| M.1P-A10411-NT110(9:5)-4x | | 9,25 | 4,75 | 4x | 46 | 4,6 | 1,83 | 1310 | 715,8 |
| M.1P-A10411-NT110(7:7)-4x | | 7,00 | 7,00 | 4x | 55 | 5,0 | 1.98 | 753 | 380,3 |
| M.1P-A10411-NT110(5:10)-4x | | 5,25 | 9,75 | 4x | 162 | 10,7 | 2,69 | 1370 | 509,3 |
| | | | | | | | | | |

(fortgesetzt)

| Name | Mikrogel MG-Typ | MG-Konzentration | PU-V-Konzentration | Dispergierung | η bei $\gamma$=5 $s^{-1}$ | η bei $\gamma$=100 $s^{-1}$ | η bei $\gamma$=1000 $s^{-1}$ | η bei $\gamma$=0,1$s^{-1}$/ | $\gamma$(0,1 $s^{-1}$) $\gamma$(1000 $s^{-1}$ |
|---|---|---|---|---|---|---|---|---|---|
| | | [%] | [%] | | [Pa*s] | [Pa*s] | [Pa*s] | [Pa*s] | [ ] |
| OBR 1326K-NT110 (14%)-4x | OBR 1326K | | | 6x | 93 | 6,1 | 0,95 | 310 | 316,3 |
| OBR 1326K-A10411-NT110 (11:4)-4x | | | | 6x | 201 | 10,0 | 1,52 | 1770 | 1164,5 |
| OBR 1326K-A10411-NT110 (9:5)-4x | | 9,00 | 5,00 | 6x | 225 | 15,7 | 3,96 | 3010 | 760,1 |
| OBR 1326K-A10411-NT110 (7:7)-4x | | 7,00 | 7,00 | 6x | 347 | 13,9 | 2,98 | 4550 | 1526,5 |
| OBR 1326K-A10411-NT110 (5:10)-4x | | 5,00 | 10,00 | 6x | 348 | 11,5 | 2,67 | 962 | 360,3 |
| | | | | | | | | | |
| OBR 1295-NT110 (14%)-4x | OBR 1295K | 14,10 | 0,00 | 4x | 28 | 3,5 | 1,46 | 599 | 410,3 |
| OBR 1295-A10411-NT110 (11:4)-4x | | 11,20 | 3,75 | 4x | 53 | 4,2 | 1,55 | 1120 | 722,6 |
| OBR 1295K-A10411-NT110 (9:5)-4x | | 9,25 | 4,75 | 4x | 60 | 4,5 | 1,63 | 1210 | 742,3 |
| OBR 1295-A10411-NT110 (7:7)-4x | | 7.00 | 7,00 | 4x | 53 | 4,4 | 1,69 | 1500 | 887,6 |
| OBR 1295K-A10411-NT110 (5:10)-4x | | 5,25 | 9,75 | 4x | 209 | 9,1 | 2,12 | 4420 | 2084,9 |

In der Tabelle bedeuten:

NT110: Nynas T110
A10411: Additin 10411
4x: Vier mal durch den Homogenisator gegeben.

Tabelle 3 zeigt, dass durch die Kombination von Additin 10411 mit Mikrogel in Nynas T110 die Viskositäten gegenüber der Additin-freien Zusammensetzung angehoben werden.
Mit der 7 zu 7- und der 9 zu 5- Kombination von OBR 1326K zu Additin 10411 werden zudem synergistische Viskositätserhöhungen erreicht.

**Patentansprüche**

1. Zusammensetzung, enthaltend mindestens ein nicht-vernetzbares organisches Medium (A), welches bei einer Temperatur von 120°C eine Viskosität von weniger als 30000 mPas aufweist, mindestens ein vernetztes Mikrogel (B) und mindestens ein Verdickungsmittel (C), wobei das Mikrogel (B) ausgewählt wird aus nicht-modifizierten Mikrogelen und modifizierten, Mikrogelen, die funktionelle Gruppen aufweisen, und wobei die funktionellen Gruppen Aldehyd-, Carboxyl-, Nitril-, Mercapto-, Dithiocarbamat-, Polysulfid-, Xanthogenat-, Thiobenzthiazol-, Dithiophosphorsäuregruppen, ungesättigte Dicarbonsäuregruppen, Hydroxyl-, Epoxy-, Amin-, Säureamid-, Säureanhydrid-, Isocyanat- oder ungesättigte Gruppen sind.

2. Zusammensetzung nach Anspruch 1, worin das nicht-vernetzbare, organische Medium (A) bei einer Temperatur von 120°C eine Viskosität von weniger als 1000 mPas aufweist.

3. Zusammensetzung nach Anspruch 1 oder 2, worin das nicht-vernetzbare, organische Medium (A) bei einer Temperatur von 120°C eine Viskosität von weniger als 200 mPas aufweist.

4. Zusammensetzung nach den Ansprüchen 1 bis 3, **dadurch gekennzeichnet, dass** die Primärpartikel des Mikrogels (B) eine annähernd kugelförmige Geometrie aufweisen.

5. Zusammensetzung nach den Ansprüchen 1 oder 4, **dadurch gekennzeichnet, dass** die Abweichung der Durchmesser eines einzelnen Primärpartikels des Mikrogels (B), definiert als

$$[(d1 - d2) / d2] \times 100,$$

worin d1 und d2 zwei beliebige Durchmesser des Primärpartikels sind und d1 > d2 ist, weniger als 250 % beträgt.

6. Zusammensetzung nach Anspruch 5, worin die genannte Abweichung weniger als 50 % beträgt.

7. Zusammensetzung nach einem der Ansprüche 1 bis 6, **dadurch gekennzeichnet, dass** die Primärpartikel des Mikrogels (B) eine durchschnittliche Teilchengröße von 5 bis 500 nm aufweisen.

8. Zusammensetzung nach einem der Ansprüche 1 bis 6, **dadurch gekennzeichnet, dass** die Primärpartikel des Mikrogels (B) eine durchschnittliche Teilchengröße von weniger als 99 nm aufweisen.

9. Zusammensetzung nach einem der Ansprüche 1 bis 8, **dadurch gekennzeichnet, dass** die Mikrogele (B) in Toluol bei 23°C unlösliche Anteile von mindestens 70 Gew.-% aufweisen.

10. Zusammensetzung nach einem der Ansprüche 1 bis 9, **dadurch gekennzeichnet, dass** die Mikrogele (B) in Toluol bei 23°C einen Quellungsindex von weniger als 80 aufweisen.

11. Zusammensetzung nach einem der Ansprüche 1 bis 10, **dadurch gekennzeichnet, dass** die Mikrogele (B) Glastemperaturen von -100°C bis +120°C aufweisen.

12. Zusammensetzung nach einem der Ansprüche 1 bis 11, **dadurch gekennzeichnet, dass** das Mikrogel (B) ein vernetztes Mikrogel ist, dass nicht durch energiereiche Strahlung vernetzt ist.

13. Zusammensetzung nach einem der Ansprüche 1 bis 12, **dadurch gekennzeichnet, dass** die Mikrogele (B) eine Breite des Glasübergangsbereichs von größer als 5 °C aufweisen.

14. Zusammensetzung nach einem der Ansprüche 1 bis 13, **dadurch gekennzeichnet, dass** die Mikrogele (B) durch Emulsionspolymerisation erhältlich sind.

15. Zusammensetzung nach einem der Ansprüche 1 bis 14, **dadurch gekennzeichnet, dass** das Mikrogel (B) auf Kautschuk basiert.

16. Zusammensetzung nach einem der Ansprüche 1 bis 15, **dadurch gekennzeichnet, dass** das Mikrogel (B) auf Homopolymeren oder statistischen Copolymeren basiert.

17. Zusammensetzung nach einem der Ansprüche 1 bis 16, worin das nicht-vernetzbare Medium (A) mindestens eine Verbindung ist, die aus der Gruppe ausgewählt wird, die aus Lösemitteln, gesättigten oder aromatischen Kohlenwasserstoffen, Polyetherölen, natürlichen und synthetischen Esterölen, Polyetheresterölen, Phosphorsäureestern, siliciumhaltigen Ölen, Halogenkohlenwasserstoffen und flüssigen nachwachsenden Rohstoffen besteht.

18. Zusammensetzung nach einem der Ansprüche 1 bis 17, worin das Verdickungsmittel (C) ausgewählt wird aus natürlichen organischen Verdickungsmitteln, Derivaten natürlicher organischer Verdickungsmittel, synthetischen organischen Verdickungsmitteln und anorganischen Verdickungsmitteln.

19. Zusammensetzung nach einem der Ansprüche 1 bis 18, worin das Verdickungsmittel (C) ausgewählt wird aus der Gruppe, die besteht aus Polyharnstoffen, substituierten Polyharnstoffen, Diharnstoffderivaten, Triharnstoffderivaten, Tetraharnstoffderivaten, Poly-Harnstoff-Derivaten, Bentonit, Hectorit, Montmorillonit, Zeolithe, hochdispersen Kieselsäuren, synthetischen Kieselsäuren, Polyethylen, Polypropylen, Polytetrafluorethylen, gegebenenfalls substituierte Polyamide, Polyimide, Einfachseifen unterschiedlicher Metallbasen, Gemischtseifen unterschiedlicher Metallbasen, Komplexseifen unterschiedlicher Metallbasen, Celluloseether, Hydroxyethylcellulose, Hydroxyproylcellulose, Polyacryl- und Polymethacryl-Verbindungen, Vinylpolymere, Polycarbonsäuren, Polyether.

20. Zusammensetzung nach einem der Ansprüche 1 bis 19, die in der Summe 0,1 bis 90 Gew.-% des Mikrogels (B) und des Verdickungsmittels (C), bezogen auf die Gesamtmenge der Zusammensetzung enthält, wobei das Gewichtsverhältnis von Mikrogel (B) zu Verdicker (C) von 0.1 : 99,9 bis 99,9: 0,1 beträgt.

21. Zusammensetzung nach einem der Ansprüche 1 bis 20, **dadurch gekennzeichnet, dass** sie 10 bis 99,9 Gew.-% des nicht-vernetzbaren organischen Mediums (A) enthält.

22. Zusammensetzung nach einem der Ansprüchen 1 bis 21, **dadurch gekennzeichnet, dass** sie zusätzlich Füllstoffe und/oder Additive enthält.

23. Zusammensetzung nach Anspruch 22, worin das Additiv ausgewählt ist aus der Gruppe, die besteht aus: Oxidations- und Korrosionsinhibitoren, Extrem-Pressure- und Verschleiß-Schutz-Additiven, Friction Modifiern, Detergent-Dispersant-Additiven, Dispergierhilfsmitteln, Schauminhibitoren, Pourpointerniedrigern, Haftverbesserern, Konservierungs-Wirkstoffen, Pigmenten, Farbstoffen oder Antistatika.

24. Zusammensetzung nach einem der Ansprüche 1 bis 23, **dadurch gekennzeichnet, dass** sie durch Mischen des nicht-vernetzbaren Mediums (A), des Mikrogels (B) und gegebenenfalls des Verdickungsmittels (C) mittels eines Homogenisators, einer Perlmühle (Rührwerkskugelmühle), einer Dreiwalze, einer Ein- oder Mehrwellen-Extruderschnecke, eines Kneters, eines Ultra-Turrax-Gerätes und/oder eines Dissolvers hergestellt worden ist, wobei das Verdickungsmittel (C) gegebenenfalls nachträglich in die erhaltene Mischung aus (A) und (B) gegeben wird.

25. Zusammensetzung nach Anspruch 24, **dadurch gekennzeichnet, dass** sie mittels eines Homogenisators, einer Perlmühle (Rührwerkskugelmühle), einer Dreiwalze oder eines Dissolvers hergestellt worden ist.

26. Zusammensetzung nach einem der Ansprüche 1 bis 25, **dadurch gekennzeichnet, dass** sie eine Viskosität von 2 mPas bis zu 100000000 mPas bei einer Drehzahl von 5 $s^{-1}$, bestimmt mit einem Kegel-Platte-Meßsystem nach

DIN 53018 bei 20°C aufweist.

**27.** Zusammensetzung nach einem der Ansprüche 1 bis 26, **dadurch gekennzeichnet, daß** das Mikrogel (B) einen Quellungsindex in Toluol bei 23 °C von 1 bis 15 besitzt.

**28.** Zusammensetzung nach einem der Ansprüche 1 bis 27, **dadurch gekennzeichnet, dass** die Mikrogele (B) in Toluol bei 23°C unlösliche Anteile von mindestens 95 Gew.-% aufweisen.

**29.** Zusammensetzung nach einem der Ansprüche 1 bis 28, **dadurch gekennzeichnet, daß** das Mikrogel nicht mit Hydroxylgruppen modfiziert ist.

**30.** Zusammensetzung nach einem der Ansprüche 1 bis 29, **dadurch gekennzeichnet, daß** das Mikrogel nicht modifiziert ist.

**31.** Verwendung der Zusammensetzung nach einem der Ansprüche 1 bis 30 zur Einarbeitung in thermoplastische Kunststoffe, Kautschuke oder thermoplastische Elastomere.

**32.** Verwendung der Zusammensetzung nach einem der Ansprüche 1 bis 31 zur Herstellung von Mikrogel-enthaltenden Polymeren.

**33.** Verwendung nach Anspruch 32 zur Herstellung von Mikrogel-enthaltenden Kautschuken.

**34.** Verwendung nach Anspruch 32 zur Herstellung von Mikrogel-enthaltenden thermoplastischen Elastomeren.

**35.** Verwendung der Zusammensetzungen nach einem der Ansprüche 1 bis 31 zur Herstellung von Schmierstoffen, Formkörpern oder Beschichtungen.

**36.** Verwendung der Zusammensetzung nach Anspruch 35 zur Herstellung von Schmierfetten oder modifizierten Schmierölen.

**37.** Verwendung der Zusammensetzungen nach einem der Ansprüche 1 bis 31 als Additiv für Kunststoffe, Kautschuke, Beschichtungsmittel oder Schmiermittel.

**38.** Kunststoffe, Kautschuke, thermoplastische Elastomere, Beschichtungsmittel oder Schmiermittel, enthaltend die Zusammensetzungen nach einem der Ansprüche 1 bis 31.

**39.** Verfahren zur Herstellung der Zusammensetzung nach einem der Ansprüche 1 bis 31, **dadurch gekennzeichnet, dass** es den folgenden Schritt umfasst: Dispergieren des Verdickungsmittel (C) und des Mikrogels (B) mit einem durchschnittlichen Teilchendurchmesser der Primärpartikel von 5 bis 500 nm in einem oder mehreren nicht-vernetzbaren organischen Medium(en), welche(s) Additive enthalten kann, und gegebenenfalls Zusatz weiterer Komponenten

**40.** Verfahren nach Anspruch 39, worin die nicht-vernetzbares organisches Medium basierende Zusammensetzung einer Temperaturbehandlung und/oder der Behandlung mittels eines Homogenisators, einer Kugelmühle, einer Perlmühle, einem Walzenstuhl, einer Dreiwalze, einer Ein- oder Mehrwellen-Extruderschnecke, eines Kneters, eines Ultra-Turrax und/ oder eines Dissolvers unterworfen wird, wobei die Komponente (C) gemeinsam mit den Komponenten (A) und (B) gemischt wird, oder nach deren Mischen zugesetzt wird.

## Claims

**1.** Composition comprising at least one non-crosslinkable organic medium (A) which has a viscosity at a temperature of 120°C of less than 30,000 mPas, at least one crosslinked microgel (B) and at least one thickening agent (C), wherein the microgel (B) is selected from unmodified microgels and modified microgels containing functional groups, and wherein the functional groups are aldehyde, carboxyl, nitrile, mercapto, dithiocarbamate, polysulfide, xanthogenate, thiobenzthiazole, dithiophosphoric acid groups, unsaturated dicarboxylic acid groups, hydroxyl, epoxy, amine, acid amide, acid anhydride, isocyanate or unsaturated groups.

**2.** Composition according to claim 1, wherein the non-crosslinkable organic medium (A) has a viscosity at a temperature of 120°C of less than 1000 mPas.

**3.** Composition according to claim 1 or 2, wherein the non-crosslinkable organic medium (A) has a viscosity at a temperature of 120°C of less than 200 mPas.

**4.** Composition according to claims 1 to 3, **characterised in that** the primary particles of the microgel (B) have an approximately spherical geometry.

**5.** Composition according to claim 1 or 4, **characterised in that** the difference in the diameters of an individual primary particle of the microgel (B), defined as

$$[(d1 - d2) / d2] \times 100,$$

wherein d1 and d2 are two arbitrary diameters of the primary particle and d1 > d2, is less than 250%.

**6.** Composition according to claim 5, wherein the mentioned difference is less than 50%.

**7.** Composition according to any one of claims 1 to 6, **characterised in that** the primary particles of the microgel (B) have an average particle size of from 5 to 500 nm.

**8.** Composition according to any one of claims 1 to 6, **characterised in that** the primary particles of the microgel (B) have an average particle size of less than 99 nm.

**9.** Composition according to any one of claims 1 to 8, **characterised in that** the microgels (B) have portions that are insoluble in toluene at 23°C of at least 70 wt.%.

**10.** Composition according to any one of claims 1 to 9, **characterised in that** the microgels (B) have a swelling index in toluene at 23°C of less than 80.

**11.** Composition according to any one of claims 1 to 10, **characterised in that** the microgels (B) have glass transition temperatures of from -100°C to +120°C.

**12.** Composition according to any one of claims 1 to 11, **characterised in that** the microgel (B) is a crosslinked microgel that has not been crosslinked by high-energy radiation.

**13.** Composition according to any one of claims 1 to 12, **characterised in that** the microgels (B) have a breadth of the glass transition range of greater than 5°C.

**14.** Composition according to any one of claims 1 to 13, **characterised in that** the microgels (B) are obtainable by emulsion polymerisation.

**15.** Composition according to any one of claims 1 to 14, **characterised in that** the microgel (B) is based on rubber.

**16.** Composition according to any one of claims 1 to 15, **characterised in that** the microgel (B) is based on homopolymers or random copolymers.

**17.** Composition according to any one of claims 1 to 16, wherein the non-crosslinkable medium (A) is at least one compound selected from the group consisting of solvents, saturated or aromatic hydrocarbons, polyether oils, natural and synthetic ester oils, polyether ester oils, phosphoric acid esters, silicon-containing oils, halogenated hydrocarbons and liquid renewable raw materials.

**18.** Composition according to any one of claims 1 to 17, wherein the thickening agent (C) is selected from natural organic thickening agents, derivatives of natural organic thickening agents, synthetic organic thickening agents and inorganic thickening agents.

**19.** Composition according to any one of claims 1 to 18, wherein the thickening agent (C) is selected from the group consisting of polyureas, substituted polyureas, diurea derivatives, triurea derivatives, tetraurea derivatives, polyurea derivatives, bentonite, hectorite, montmorillonite, zeolites, highly disperse silicas, synthetic silicas, polyethylene, polypropylene, polytetrafluoroethylene, optionally substituted polyamides, polyimides, simple soaps of various metal bases, mixed soaps of various metal bases, complex soaps of various metal bases, cellulose ether, hydroxyethylcellulose, hydroxypropylcellulose, polyacrylic and polymethacrylic compounds, vinyl polymers, polycarboxylic acids, polyethers.

**20.** Composition according to any one of claims 1 to 19 that comprises in total from 0.1 to 90 wt.% of the microgel (B) and of the thickening agent (C), based on the total amount of the composition, wherein the weight ratio of microgel (B) to thickener (C) is from 0.1 : 99.9 to 99.9 : 0.1.

**21.** Composition according to any one of claims 1 to 20, **characterised in that** it comprises from 10 to 99.9 wt.% of the non-crosslinkable organic medium (A).

**22.** Composition according to any one of claims 1 to 21, **characterised in that** it additionally comprises fillers and/or additives.

**23.** Composition according to claim 22, wherein the additive is selected from the group consisting of: oxidation and corrosion inhibitors, extreme-pressure and wear-protection additives, friction modifiers, detergent-dispersant additives, dispersing aids, foam inhibitors, pour-point-lowering agents, adhesion promoters, preservatives, pigments, colourings or antistatics.

**24.** Composition according to any one of claims 1 to 23, **characterised in that** it has been prepared by mixing the non-crosslinkable medium (A), the microgel (B) and optionally the thickening agent (C) by means of a homogeniser, a ball mill (agitating ball mill), a three-roll mill, a single- or multi-shaft extruder screw, a kneader, an Ultra-Turrax device and/or a dissolver, wherein the thickening agent (C) is optionally added subsequently to the resulting mixture of (A) and (B).

**25.** Composition according to claim 24, **characterised in that** it has been prepared by means of a homogeniser, a ball mill (agitating ball mill), a three-roll mill or a dissolver.

**26.** Composition according to any one of claims 1 to 25, **characterised in that** it has a viscosity of from 2 mPas to 100,000,000 mPas at a speed of 5 $s^{-1}$, determined at 20°C using a cone/plate measuring system in accordance with DIN 53018.

**27.** Composition according to any one of claims 1 to 26, **characterised in that** the microgel (B) has a swelling index in toluene at 23°C of from 1 to 15.

**28.** Composition according to any one of claims 1 to 27, **characterised in that** the microgels (B) have portions that are insoluble in toluene at 23°C of at least 95 wt.%.

**29.** Composition according to any one of claims 1 to 28, **characterised in that** the microgel has not been modified by hydroxyl groups.

**30.** Composition according to any one of claims 1 to 29, **characterised in that** the microgel has not been modified.

**31.** Use of the composition according to any one of claims 1 to 30 for incorporation into thermoplastic plastics materials, rubbers or thermoplastic elastomers.

**32.** Use of the composition according to any one of claims 1 to 31 in the production of microgel-containing polymers.

**33.** Use according to claim 32 in the production of microgel-containing rubbers.

**34.** Use according to claim 32 in the production of microgel-containing thermoplastic elastomers.

**35.** Use of the compositions according to any one of claims 1 to 31 in the production of lubricants, moulded bodies or coatings.

**36.** Use of the composition according to claim 35 in the production of lubricating greases or modified lubricating oils.

**37.** Use of the compositions according to any one of claims 1 to 31 as an additive for plastics materials, rubbers, coating compositions or lubricants.

**38.** Plastics materials, rubbers, thermoplastic elastomers, coating compositions or lubricants comprising the compositions according to any one of claims 1 to 31.

**39.** Process for the preparation of the composition according to any one of claims 1 to 31, **characterised in that** it comprises the following steps: dispersion of the thickening agent (C) and of the microgel (B) having an average particle diameter of the primary particles of from 5 to 500 nm in one or more non-crosslinkable organic media which can contain additives, and optionally addition of further components.

**40.** Process according to claim 39, wherein the composition based on the non-crosslinkable organic medium is subjected to heat treatment and/or treatment by means of a homogeniser, a ball mill, a bead mill, a roll mill, a three-roll mill, a single- or multi-shaft extruder screw, a kneader, an Ultra-Turrax and/or a dissolver, wherein component (C) is mixed together with components (A) and (B) or is added after they have been mixed.

## Revendications

**1.** Composition contenant au moins un milieu organique (A) non réticulable, qui présente à une température de 120 °C une viscosité de moins de 30 000 mPa.s, au moins un microgel réticulé (B) et au moins un épaississant (C), le microgel (B) étant choisi parmi des microgels non modifiés et des microgels modifiés qui comportent des groupes fonctionnels, et les groupes fonctionnels étant des groupes aldéhyde, carboxy, nitrilo, mercapto, dithiocarbamate, polysulfure, xanthogénate, thiobenzothiazole, dithiophosphoryle, des groupes dicarboxy insaturés, hydroxy, époxy, amino, amido, anhydride d'acide, isocyanate ou insaturés.

**2.** Composition selon la revendication 1, dans laquelle le milieu organique (A) non réticulable présente à une température de 120 °C une viscosité de moins de 1 000 mPa.s.

**3.** Composition selon la revendication 1 ou 2, dans laquelle le milieu organique (A) non réticulable présente à une température de 120 °C une viscosité de moins de 200 mPa.s.

**4.** Composition selon les revendications 1 à 3, **caractérisée en ce que** les particules primaires du microgel (B) présentent une géométrie approximativement sphérique.

**5.** Composition selon les revendications 1 à 4, **caractérisée en ce que** la différence des diamètres d'une particule primaire individuelle du microgel (B), définie par

$$[(d1\text{-}d2)/d2] \times 100,$$

où d1 et d2 sont deux diamètres quelconques de la particule primaire et d1 est > d2, est inférieure à 250 %.

**6.** Composition selon la revendication 5, dans laquelle la différence mentionnée est inférieure à 50 %.

**7.** Composition selon l'une quelconque des revendications 1 à 6, **caractérisée en ce que** les particules primaires du microgel (B) ont une taille moyenne de particule de 5 à 500 nm.

**8.** Composition selon l'une quelconque des revendications 1 à 6, **caractérisée en ce que** les particules primaires du microgel (B) ont une taille moyenne de particule inférieure à 99 nm.

**9.** Composition selon l'une quelconque des revendications 1 à 8, **caractérisée en ce que** les microgels (B) comportent dans du toluène à 23 °C des fractions insolubles d'au moins 70 % en poids.

**10.** Composition selon l'une quelconque des revendications 1 à 9, **caractérisée en ce que** les microgels (B) présentent

dans du toluène à 23 °C un indice de gonflement de moins de 80.

**11.** Composition selon l'une quelconque des revendications 1 à 10, **caractérisée en ce que** les microgels (B) ont des températures de transition vitreuse de - 100 °C à +120 °C.

**12.** Composition selon l'une quelconque des revendications 1 à 11, **caractérisée en ce que** le microgel (B) est un microgel réticulé qui n'est pas réticulé par un rayonnement à haute énergie.

**13.** Composition selon l'une quelconque des revendications 1 à 12, **caractérisée en ce que** les microgels (B) présentent une largeur du domaine de transition vitreuse de plus de 5 °C.

**14.** Composition selon l'une quelconque des revendications 1 à 13, **caractérisée en ce que** les microgels (B) peuvent être obtenus par polymérisation en émulsion.

**15.** Composition selon l'une quelconque des revendications 1 à 14, **caractérisée en ce que** le microgel (B) est à base de caoutchouc.

**16.** Composition selon l'une quelconque des revendications 1 à 15, **caractérisée en ce que** le microgel (B) est à base d'homopolymères ou de copolymères statistiques.

**17.** Composition selon l'une quelconque des revendications 1 à 16, dans laquelle le milieu (A) non réticulable est au moins un composé qui est choisi dans l'ensemble qui consiste en des solvants, des hydrocarbures saturés ou aromatiques, des huiles de polyéthers, des huiles d'esters naturelles ou synthétiques, des huiles de polyesters, des esters d'acide phosphorique, des huiles contenant du silicium, des hydrocarbures halogénés et des matières premières renouvelables liquides.

**18.** Composition selon l'une quelconque des revendications 1 à 17, dans laquelle l'épaississant (C) est choisi parmi des épaississants organiques naturels, des dérivés d'épaississants organiques naturels, des épaississants organiques synthétiques et des épaississants inorganiques.

**19.** Composition selon l'une quelconque des revendications 1 à 18, dans laquelle l'épaississant(C) est choisi dans l'ensemble qui est constitué par des polyurées, des polyurées substituées, des dérivés de diurée, des dérivés de triurée, des dérivés de tétra-urée, des dérivés de poly-urée, la bentonite, l'hectorite, la montmorillonite, les zéolithes, des acides siliciques hautement dispersés, des acides siliciques synthétiques, le polyéthylène, le polypropylène, le polytétrafluoroéthylène, des polyamides éventuellement substitués, des polyimides, des savons simples de diverses bases métalliques, des savons mixtes de diverses bases métalliques, des savons complexes de diverses bases métalliques, des éthers de cellulose, l'hydroxyéthylcellulose, l'hydroxypropylcellulose, des composés polyacryliques et polyméthacryliques, des polymères vinyliques, des poly(acide carboxylique)s, des polyéthers.

**20.** Composition selon l'une quelconque des revendications 1 à 19, qui contient au total de 0,1 à 90 % en poids du microgel (B) et de l'épaississant (C), par rapport à la quantité totale de la composition, le rapport pondéral du microgel (B) à l'épaississant (C) allant de 0,1:99,9 à 99,9:0,1.

**21.** Composition selon l'une quelconque des revendications 1 à 20, **caractérisée en ce qu'**elle contient de 10 à 99,9 % en poids du milieu organique (A) non réticulable.

**22.** Composition selon l'une quelconque des revendications 1 à 21, **caractérisée en ce qu'**elle contient en outre des charges et/ou des additifs.

**23.** Composition selon la revendication 22, dans laquelle l'additif est choisi dans l'ensemble qui est constitué par : des inhibiteurs d'oxydation et de corrosion, des additifs protecteurs contre l'usure et les pressions extrêmes, des modificateurs de frottement, des additifs dispersants-détergents, des adjuvants de dispersion, des antimousses, des agents abaissant le point d'écoulement, des agents améliorant l'adhérence, des substances actives conservatrices, des pigments, des colorants ou des agents antistatiques.

**24.** Composition selon l'une quelconque des revendications 1 à 23, **caractérisée en ce qu'**elle a été préparée par mélange du milieu (A) non réticulable, du microgel (B) et éventuellement de l'épaississant (C) au moyen d'un homogénéisateur, d'un broyeur à billes (broyeur à billes et à agitateur), d'un broyeur à trois cylindres, d'une vis

extrudeuse à un ou plusieurs arbres, d'un malaxeur, d'un appareil Ultra-Turrax et/ou d'un dissolveur, l'épaississant (C) étant éventuellement ajouté ultérieurement dans le mélange de (A) et (B) obtenu.

**25.** Composition selon la revendication 24, **caractérisée en ce qu'**elle a été obtenue au moyen d'un homogénéisateur, d'un broyeur à billes (broyeur à billes et à agitateur), d'un broyeur à trois cylindres ou d'un dissolveur.

**26.** Composition selon l'une quelconque des revendications 1 à 25, **caractérisée en ce qu'**elle présente une viscosité de 2 mPa.s à 1 000 000 000 mPa.s à une vitesse de rotation de 5 $s^{-1}$, déterminée à l'aide d'un système de mesure à bille et plateau selon DIN 53018, à 20 °C.

**27.** Composition selon l'une quelconque des revendications 1 à 26, **caractérisée en ce que** le microgel (B) a un indice de gonflement dans du toluène à 23 °C de 1 à 15.

**28.** Composition selon l'une quelconque des revendications 1 à 27, **caractérisée en ce que** les microgels (B) comportent dans du toluène à 23 °C des fractions insolubles d'au moins 95 % en poids.

**29.** Composition selon l'une quelconque des revendications 1 à 28, **caractérisée en ce que** le microgel n'est pas modifié par des groupes hydroxy.

**30.** Composition selon l'une quelconque des revendications 1 à 29, **caractérisée en ce que** le microgel n'est pas modifié.

**31.** Utilisation de la composition selon l'une quelconque des revendications 1 à 30, pour incorporation dans des matières synthétiques thermoplastiques, des caoutchoucs ou des élastomères thermoplastiques.

**32.** Utilisation de la composition selon l'une quelconque des revendications 1 à 31, pour la préparation de polymères contenant des microgels.

**33.** Utilisation selon la revendication 32, pour la préparation de caoutchoucs contenant des microgels.

**34.** Utilisation selon la revendication 32, pour la préparation d'élastomères thermoplastiques contenant des microgels.

**35.** Utilisation des compositions selon l'une quelconque des revendications 1 à 31, pour la production de lubrifiants, de corps moulés ou de revêtements.

**36.** Utilisation de la composition selon la revendication 35, pour la préparation de graisses lubrifiantes ou d'huiles de graissage modifiées.

**37.** Utilisation des compositions selon l'une quelconque des revendications 1 à 31, en tant qu'additif pour matières plastiques, caoutchoucs, produits de revêtement ou lubrifiants.

**38.** Matières plastiques, caoutchoucs, élastomères thermoplastiques, produits de revêtement ou lubrifiants, contenant les compositions selon l'une quelconque des revendications 1 à 31.

**39.** Procédé pour la préparation de la composition selon l'une quelconque des revendications 1 à 31, **caractérisé en ce qu'**il comprend les étapes suivantes : dispersion de l'épaississant (C) et du microgel (B) ayant un diamètre moyen de particule des particules primaires de 5 à 500 nm, dans un ou plusieurs milieu(x) organique(s) non réticulable (s) qui peut/peuvent contenir des additifs, et éventuellement addition d'autres composants.

**40.** Procédé selon la revendication 39, dans lequel la composition à base de milieu organique non réticulable est soumise à un traitement thermique et/ou au traitement par un homogénéisateur, un broyeur à boulets, un broyeur à billes, un broyeur à cylindres, un broyeur à trois cylindres, une vis extrudeuse à un ou plusieurs arbres, un malaxeur, un appareil Ultra-Turrax et/ou un dissolveur, le composant (C) étant mélangé conjointement avec mes composants (A) et (B) ou étant ajouté après leur mélange.

Abb. 1: Funktionsweise des Homogenisierventils

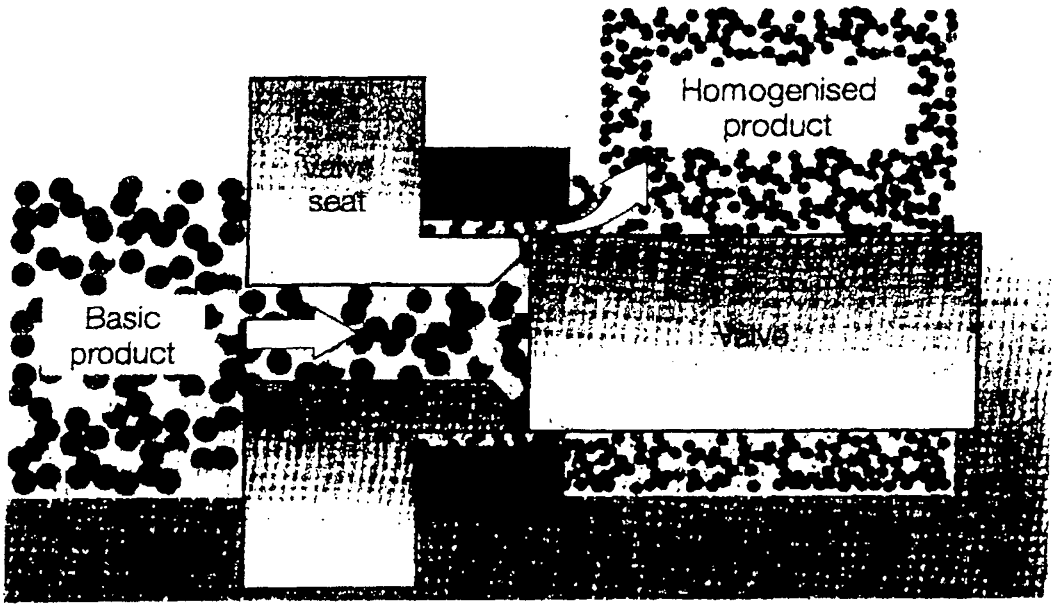

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4220563
- GB PS1078400 A
- EP 405216 A
- EP 854171 A
- EP 0953615 A2
- EP 0953615 A3
- JP 2004292693 A
- DE 2910154
- DE 3742180 A
- EP 2004052290 W
- DE 4220563 A
- DE 19701489
- DE 19701488
- DE 19834804
- DE 19834803
- DE 19834802
- DE 19929347
- DE 19939865
- DE 19942620
- DE 19942614
- DE 10021070
- DE 10038488
- DE 10039749
- DE 10052287
- DE 10056311
- DE 10061174
- US 5302696 A
- US 5442009 A
- US PS2187146 A
- WO 0202683 A
- US 6399706 B
- US 6127488 A


### In der Beschreibung aufgeführte Nicht-Patentliteratur


- *Chinese Journal of Polymer Science,* 2002, vol. 20 (2), 93-98
- **LACKE ; DRUCKFARBEN.** Römpp Lexikon. Georg Thieme Verlag, 1998
- **H.G. ELIAS.** Makromoleküle, Band 2, Technologie. 1992, vol. 2, 99 ff
- **HOUBEN-WEYL.** Methoden der organischen Chemie. vol. 14/2, 848
- Ullmanns Enzyklopädie der technischen Chemie. Verlag Chemie, vol. 20, 457 ff, 504, 507ff, 517, 518, 524
- **BROCK, THOMAS ; GROTEKLAES, MICHAEL ; MISCHKE, PETER.** Lehrbuch der Lacktechnologie. Curt R. Vincentz Verlag, 1998, 93ff
- **W. J. BARTZ.** Additive in Schmierstoffen. expert verlag, 1994
- **W. SCHOLTAN ; H. LANGE.** Bestimmung der Teilchengrößenverteilung von Latices mit der Ultrazentrifuge. *Kolloid-Zeitschrift und Zeitschrift für Polymere,* 1972, vol. 250 (8